# EUROPÄISCHE PATENTSCHRIFT

(11) **EP 2 796 767 B1**
(45) Veröffentlichungstag und Bekanntmachung des Hinweises auf die Patenterteilung: **03.04.2019**
(21) Anmeldenummer: 14164163.9
(22) Anmeldetag: 10.04.2014
(51) Int. Cl.: F16K 17/32, F17C 13/04

(54) **Sicherheitseinrichtung zum Einbau in einer Gas-Versorgungsanlage, insbesondere in einer Acetylen-Versorgungsanlage**
Safety device for installation in a gas supply installation, in particular in an acetylene supply installation
Dispositif de sécurité pour l'intégration dans une installation d'approvisionnement en gaz, notamment dans une installation d'approvisionnement en acétylène

(30) Priorität: 25.04.2013 DE 102013104220
(43) Veröffentlichungstag der Anmeldung: 29.10.2014
(73) Patentinhaber: Spectron Gas Control Systems GmbH, 65933 Frankfurt (DE)
(72) Erfinder: van der Klift, Johan, 65817 Eppstein-Vockenhausen (DE); Roncka, Andreas, 64579 Gernsheim (DE)
(74) Vertreter: Staudt, Armin Walter

(56) Entgegenhaltungen:
- WO-A1-2006/011023
- US-A- 3 825 026
- US-B2- 7 309 113

## Beschreibung

### Technisches Gebiet

Die vorliegende Erfindung betrifft eine Sicherheitseinrichtung zum Einbau in einer Gas-Versorgungsanlage, insbesondere einer Acetylen-Versorgungsanlage, bei der mittels eines Hauptdruckreglers unter Vordruck zugeführtes Gas auf Hinterdruck entspannt wird.

Bei der Gas-Versorgungsanlage handelt es sich im einfachsten Fall um eine Gasflasche, einen Tank oder einen anderen Behälter. Es können auch mehrere Behälter miteinander verbunden sein, so dass bei Entleerung des einen Behälters auf einen noch gefüllten Behälter umgeschaltet werden kann.

Mittels der Gas-Versorgungsanlage wird das Gas einer Entnahmestelle zugeführt. Das zu entnehmende Gas steht unter Druck und bietet insoweit bereits ein gewisses Gefährdungspotenzial für Anwender und Umwelt. Grundsätzlich ist die Sicherheitseinrichtung für den Einbau in allen derartigen Gas-Versorgungsanlagen geeignet. Besonders vorteilhaft wirkt sie sich jedoch bei brennbaren oder giftigen Gasen aus, wie beispielsweise Methan, Propan, Erdgas, Wasserstoff, Flüssiggas, Kohlenmonoxid, Halogene und dergleichen aus und insbesondere bei Acetylen-Gasversorgungsanlagen .

Acetylen (C₂H₂) ist bekanntlich leicht entzündlich und zerfällt bei hoher Temperatur oder bei hohem Druck schlagartig unter Bildung von Wärme in seine Elemente. Der Zerfall erfolgt unter Umständen detonativ und gefährdet Mensch, Umgebung und Anlage. Der maximale Arbeitsdruck (Hinterdruck) in Acetylen-Entnahmeleitungen ist in der Regel deshalb auf 1,5 bar Überdruck begrenzt. Zusätzlich sind in Armaturen oder Rohrleitungen unterschiedliche Sicherungseinrichtungen vorgesehen, die beispielsweise für Acetylenanlagen allgemein in der TRAC 207 (Technische Regeln für Acetylenanlagen und Calciumcarbidlager) und speziell für Acetylenflaschen-Batterieanlagen in der Norm EN ISO 14114:1999 (Acetylenflaschen-Baterrieanlagen für Schweißen, Schneiden und verwandte Verfahren - Allgemeine Anforderungen) festgelegt sind.

Zu Sicherungseinrichtungen auf der Vordruckseite gehören manuelle oder automatische Schnellschlusseinrichtungen nach EN ISO 14114:1999, Absatz 3.6, Gasrücktrittsicherungen und Flammensperren. Gasrücktrittsicherungen verhindern ein Zurückströmen des Acetylens und in Flammensperren werden heiße Zersetzungsschwaden abgekühlt und zurückgehalten.

Schnellschlusseinrichtungen sind insbesondere in Rohrleitungen oder Armaturen auf der Vordruckseite der Flaschenbatterieanlage eingebaut und schließen diese bei einem auftretenden Acetylenzerfall manuell oder automatisch ab, so dass die Ausbreitung einer Acetylenzersetzung bereits vor dem Hauptdruckregler aufgehalten wird und diese nicht auf die Hinterdruckseite des Druckreglers durchtritt. In Leitungssystemen, bei denen mit einem Anlaufen von Explosionen von zwei Seiten her gerechnet werden muss, sind derartige Schnellschlusseinrichtungen entsprechend doppelt für beide Seiten auszuführen. Sie werden auch als Zerfallssperren bezeichnet und müssen einem möglichen Acetylenzerfall auch bei detonativem Verlauf standhalten, bei dem Drücke von mehr als 100 MPa (1000 bar) auftreten können.

### Stand der Technik

Die Sicherheitseinrichtungen sind an geeigneter Stelle in Versorgungsleitungen oder Armaturen eingesetzt. So beschreibt beispielsweise die DE 43 08 801 C2 eine Acetylen-Versorgungsanlage aus Flaschenbündeln, die mittels einer rechner-gesteuerten pneumatischen Umschaltanlage miteinander verbunden sind. Auf der Vordruckseite des Leitungssystems, das heißt, vor dem Hauptdruckregler, sind ein Schnellschlussventil und ein Entlastungsventil, und unmittelbar vor der Entnahmestelle ist eine Zerfallssperre vorgesehen.

Zum konstruktiven Aufbau dieser Sicherheitseinrichtungen finden sich keine Angaben. Durch das Entlastungsventil kann bei einem Druckanstieg über ein vorgegebenes Maß Acetylengas ins Freie abblasen. Das abströmende Acetylen an einen sicheren Ort abzuleiten und ist dennoch mit Gefahr und Umweltverschmutzung verbunden und daher im Grunde unerwünscht (EN ISO 14114:1999 Absatz 4.1.1.f).

Aus der DE-AS 20 01 954 ist ein Schnellschlussventil für den Einsatz in der Hochdruckleitung einer Acetylen-Bündelanlage bekannt, das im Falle einer Explosion gleichzeitig als Gasabschluss und als Flammensperre wirkt. Es besteht aus einem Gehäuse mit Innenbohrung und einem darin axial beweglichen und an einem Stahldraht fixierten Zylinder, der im geöffneten Zustand des Ventils von dem Acetylengas umströmt wird. Infolge der Druckwelle einer Explosion wird der Zylinder unter Deformation des Haltedrahtes gegen eine Dichtstelle der Innenbohrung gepresst, beispielsweise gegen eine konische Wandung aus Blei und verschließt so die Innenbohrung. Die in Strömungsrichtung hinter der Dichtung angeordnete Flammensperre besteht aus einem in der Innenbohrung des Gehäuses fixierten Stahlwollepropfen.

Das Schnellschlussventil ist zwar konstruktiv einfach, hat aber Nachteile. Einer davon ist, dass das Schließverhalten nicht verlässlich reproduzierbar ist, ein anderer, dass das Ventil beim Einsatz zerstört wird und vor dem Weiterbetrieb der Gasversorgungseinrichtung entfernt und ersetzt werden muss.

Ein weiteres prinzipielles Problem einer verlässlichen Versorgung mit Acetylengas besteht darin, dass auch der Auslassdruck des Druckreglers mit einem gewissen Grad an Unsicherheit behaftet ist. Diese Unsicherheit beruht beispielsweise auf der Möglichkeit einer allmählichen Druckerhöhung durch Regelabweichung oder einer plötzlichen Druckerhöhung infolge eines Reglerdefekts. Um dies zu vermeiden, empfiehlt die EN ISO 14114:1999, Absatz 3.7 den Einsatz einer so genannten Druckbegrenzungseinrichtung.

Aus der GB 2 342 416 B ist ein Druckregler als Gasflaschen-Ventilaufsatz bekannt, der diese Funktion umfasst. Hierzu ist ein Gehäuse vorgesehen, in dem ein Ventilkolben zwischen einer vorderen und einer hinteren Dichtung axial beweglich gelagert ist. Der Ventilkolben hat ein der Gasflasche zugewandtes vorderes Ende mit kleiner Querschnittsfläche und ein gegenüberliegendes Ende mit einer größeren Querschnittsfläche, an dem eine Spiralfeder anliegt und das in eine von der hinteren Dichtung abgedichtete Druckkammer ragt, in die ein Gaseinlass mündet.

Der am Gasflaschenausgang gegen den kleineren Wirkungsquerschnitt anliegende Vordruck genügt, um den Ventilkolben gegen den Druck der Spiralfeder von der vorderen Dichtung abzuheben, um so die Gasentnahme aus der Gasflasche zu ermöglichen. Ein Teil des entnommenen Gases wird mit einem am Druckregler eingestellten Hinterdruck über einen Bypass über den Gaseinlass der Druckkammer wieder zugeführt, in die sich das hintere Ende des Ventilkolbens erstreckt. Mit steigendem Hinterdruck nimmt somit der Druck auf die, hintere, größere Querschnittsfläche des Ventilkolbens zu, bis dieser Druck in Verbindung mit der Federkraft der Spiralfeder genügt, um den Ventilkolben gegen die vordere Dichtung zu pressen, so dass die weitere Gasentnahme gestoppt wird.

Auf diese Weise wird der tatsächlich anliegende Hinterdruck im Verhältnis zum Vordruck geregelt und begrenzt. Das Ventil wird dabei jedoch lediglich mittels des wenn auch erhöhten Hinterdrucks in seiner Schließstellung gehalten. Steigt der Vordruck an, beispielsweise wegen einer Acetylen-Zerfallsreaktion, besteht die Gefahr, dass das Ventil öffnet und die Druckbegrenzungseinrichtung dadurch zerstört wird.

In der US 3,825,026 A wird ein Ventil für den Einbau in einen Lüftungskanal beschrieben, das im Normalbetrieb in Offenstellung ist und bei einer Druckumkehr auf einen Steuerbefehl hin in Geschlossenstellung gebracht werden kann. Das Schließventil umfasst zwei Kammern, wobei in der einen Kammer stets Vordruck (inlet pressure) anliegt und in der anderen Kammer entweder Umgebungsdruck oder Hinterdruck (outlet pressure). Außerdem gibt es zwei miteinander über eine Leitung verbundene Prüfventile (check valves), von denen eines offen und das andere geschlossen ist, und ein "Pilotventil" (pilot valve) mit drei Kammern und einem Magnetschalter. Solange der Vordruck höher ist als der Hinterdruck, ist das eine Prüfventil geschlossen und das Prüfventil ist geöffnet. Ist der Hinterdruck größer als der Vordruck, so ist das andere Prüfventil geöffnet und mit einer der Kammern des Schließventils verbunden, in der dann ebenfalls Hinterdruck anliegt, der das Schließventil schließt. Der Magnetschalter ist nun aktiviert.

Die WO 2006/011023 A1 beschreibt ein Gasflaschenventil in Form einer mehrfunktionalen Ventileinheit zum Befüllen oder zum Entleeren einer Gasflasche. Die Ventileinheit verfügt über einen Ventilkörper, in dem aufgenommen sind: ein Hand-Absperrventil, ein automatisches Absperrventil, ein Gasdruckregler, ein Mindestdruckregelventil, ein Druckmesser, ein Durchflussregler und ein Sicherheitsventil zur Entlüftung zwischen dem Gasdruckregler und dem Durchflussregler. Eine Besonderheit des Gasflaschenventils liegt darin, dass der Durchflussregler vom Rest der Ventileinheit abnehmbar ist. Tritt im Bereich des Druckentlastungsventils ein zu hoher Druck auf, beispielsweise infolge einer Leckage im automatischen Absperrventil, so kann das Gas in die Atmosphäre austreten. Auch ein zu hoher Gasdruck ausgangsseitig des Gasdruckreglers kann in die Atmosphäre entlüften.

Die US7309113B2 beschreibt ein Steuersystem für ein Ventil zum Befüllen bzw. zum Entleeren eines Gasbehälters.

### Technische Aufgabenstellung

Der Erfindung liegt die Aufgabe zugrunde, eine Sicherheitseinrichtung für eine Gas-Versorgungsanlage, insbesondere für eine Acetylen-Versorgungsanlage bereitzustellen, die sich durch kompakten Aufbau und hohe Betriebssicherheit auszeichnet, und die die oben erläuterten Nachteile der bekannten Vorrichtungen vermeidet.

### Allgemeine Beschreibung der Erfindung

Diese Aufgabe wird erfindungsgemäß dadurch gelöst, dass die Sicherheitseinrichtung einen Ventilkörper umfasst, in dem ein Überdruckventil einer Schnellschlusseinrichtung, ein Steuerventil einer Druckbegrenzungseinrichtung und ein dafür als gemeinsames Absperrventil dienendes Sicherheitsventil aufgenommen sind, indem das Sicherheitsventil mit dem Überdruckventil und dem Steuerventil fluidisch verbindbar ist und schließt, wenn entweder das Überdruckventil infolge eines oberhalb eines Vordruck-Grenzwertes liegenden Vordrucks öffnet oder wenn das Steuerventil infolge eines oberhalb eines Hinterdruck-Grenzwertes liegenden Hinterdrucks öffnet.

Die erfindungsgemäße Sicherheitseinrichtung umfasst eine automatische Schnellschlusseinrichtung und eine automatische Druckbegrenzungseinrichtung. Im Unterschied zum Stand der Technik sind diese Funktionen jedoch nicht an unterschiedlichen Stellen des Leitungssystems der Gas-Versorgungsanlage vorgesehen, sondern sie sind in einer einzigen Armatur verwirklicht, die für den Einbau im Hochdruckbereich ausgelegt ist.

Zur Kombination von Schnellschlusseinrichtung und Druckbegrenzungseinrichtung sind beide Funktionen zum einen in einem gemeinsamen Ventilgehäuse ausgebildet, das beispielsweise als im Wesentlichen monolithischer, mehrteiliger Block gefertigt ist. Und zum andern sind diese Funktionen selbst als Ventile ausgelegt, nämlich als Überdruckventil beziehungsweise als Steuerventil, wobei diese Ventile wiederum mit einem Sicherheitsventil verbunden sind, das für die beiden Funktionen als gemeinsames Absperrventil dient. Das Sicherheitsventil schließt die Versorgungsleitung und damit die weitere Gaszufuhr unmittelbar ab, wenn entweder das Überdruckventil oder das Steuerventil öffnet. Es erfüllt damit vorzugsweise die Vorgaben für ein druckgesteuertes Absperrventil gemäß EN ISO 14114:1999; Anhang B.

Das Überdruckventil öffnet, wenn der Vordruck (Betriebsdruck) einen vorgegebenen Grenzwert übersteigt. Der Grenzwert ist einstellbar oder er wird werksseitig voreingestellt. Er liegt beispielsweise beim 1,2-fachen des üblichen maximalen Flaschen- oder Leitungsdrucks, also beispielsweise bei 30 bar. Wird dieser Wert überschritten, muss mit einem schwerwiegenden Defekt gerechnet werden, beispielsweise mit Acetylenzerfall, und die Gasführungsleitung automatisch geschlossen werden. Damit erfüllt diese Funktion die Norm-Vorgaben für eine automatische Schnellschlusseinrichtung (EN ISO 1411:1999; Absatz 3.6.2).

Das Steuerventil öffnet, wenn der Hinterdruck einen vorgegeben Grenzwert übersteigt. Der Hinterdruck ist der vom Haupt-Gasmengenregler eingestellte Arbeitsdruck bei der Gasentnahme. Das Steuerventil verfügt zu diesem Zweck über einen Gaseinlass, an dem der Hinterdruck anliegt. Auch dieser Grenzwert ist einstellbar oder er wird werksseitig voreingestellt. Er liegt beispielsweise beim 1,2-fachen des üblichen Sollwertes für den Arbeitsdruck, beispielsweise bei 1,8 bar bei einem Soll-Arbeitsdruck von 1,5 bar. Damit erfüllt diese Funktion die Norm-Vorgaben für eine Druckbegrenzungseinrichtung gemäß EN ISO 14114:1999, Absatz 3.7.

Im normalen Betrieb sind Überdruckventil und Steuerventil geschlossen; das Sicherheitsventil ist offen und ermöglicht den ungehinderten Gasfluss. Überdruckventil und Steuerventil sind jeweils mit dem Sicherheitsventil fluidisch verbunden. Unter einer fluidischen Verbindung wird hierbei verstanden, dass es im Fall einer offenen Verbindung zu einem vollständigen oder weitgehenden Druckausgleich zwischen den miteinander fluidisch verbundenen Druckbereichen kommt, unabhängig davon, ob diese Druckbereiche unmittelbar - über einer einzige gemeinsame Verbindungsleitung - oder mittelbar - über mehrere zusammenhängende Leitungen, Hohlräume oder Druckbereiche - miteinander verbunden sind.

Das Zusammenspiel der jeweiligen Ventile beziehungsweise Funktionen in einer einzigen Armatur ermöglicht eine kompakte Bauform des Ventilgehäuses. Bei Einsatz der der Sicherheitseinrichtung kann zudem auf ein Abblaseventil oder Überstromventil verzichtet werden.

Bei einer bevorzugten Ausführungsform der erfindungsgemäßen Sicherheitseinrichtung ist vorgesehen, dass das Sicherheitsventil einen Vordruck-Gaseinlass, einen Vordruck-Gasauslass und zwischen Gaseinlass und Gasauslass eine Sicherheitsventil-Kammer aufweist, welcher mittels eines axial darin beweglichen und mit dem Vordruck öffnenden Sicherheitsventil-Schließelement, vorzugsweise eines Sicherheitsventil-Kolbens, verschließbar und dabei in einen vorderen Druckraum und in einen hinteren Druckraum unterteilbar ist, wobei in den vorderen, dem Vordruck-Gaseinlass zugewandten Druckraum das Sicherheitsventil-Schließelement, vorzugsweise der Sicherheitsventil-Kolben, mit einem ersten, kleineren Wirkungsquerschnitt hineinragt, und wobei in den hinteren, dem Vordruck-Gasauslass zugewandten Druckraum das Sicherheitsventil-Schließelement, vorzugsweise der Sicherheitsventil-Kolben, mit einem zweiten, größeren Wirkungsquerschnitt hineinragt, und wobei hinterer Druckraum und vorderer Druckraum jeweils über Druckausgleichsleitungen mit dem Überdruckventil und mit dem Steuerventil fluidisch verbindbar sind.

Die Durchleitung des Gases erfolgt über das Sicherheitsventil, das zu diesem Zweck über einen Gaseinlass und einen Gasauslass verfügt, wobei jeweils das Gas unter Vordruck anliegt. Das innerhalb der Sicherheitsventil-Kammer axial bewegliche Schließelement - beispielsweise der Sicherheitsventil-Kolben - öffnet mit dem am Gaseinlass anliegenden Vordruck und ermöglicht im normalen Betrieb eine ungehinderte Gasströmung vom Gaseinlass zum Gasauslass.

Die Sicherheitsventil-Kammer wird durch das Schließelement (im Folgenden als "Kolben" bezeichnet) in einen vorderen Druckraum und in einen hinteren Druckraum unterteilt. Wichtig dabei ist, dass der Wirkungsquerschnitt für den auf den Kolben einwirkenden Gasdruck im vorderen Druckraum geringer ist als im hinteren Druckraum. Infolge dieser Differenz im Wirkungsquerschnitt wird der Sicherheitsventil-Kolben spätestes dann in Schließstellung gebracht, wenn der Druck im hinteren Druckraum gleich groß ist wie der Druck im vorderen Druckraum. Damit ist die weitere Gaszufuhr unterbrochen. Das Sicherheitsventil ist vorzugsweise als Kolbenventil ausgeführt. Es kann aber auch ein anderes, dem Kolben äquivalentes Verschlusselement haben, beispielsweise eine Membran.

Der Sicherheitsventil-Kolben weist vorzugsweise einen Hohlraum und eine gegenüber der Sicherheitsventil-Kammer bereichsweise abgedichtete Kolbenwandung auf, wobei der Hohlraum mindestens eine Querbohrung hat, welche in einem Bereich durch die Kolbenwandung reicht, der bei geöffnetem Sicherheitsventil mit dem vorderen Druckraum verbunden und bei geschlossenem Sicherheitsventil gegenüber dem vorderen Druckraum abgedichtet ist.

Der gegen Federkraft innerhalb der Sicherheitsventil-Kammer axial bewegbare Sicherheitsventil-Kolben verfügt an seinem hinteren Ende über einen Hohlraum, der eine oder mehrere Querbohrungen aufweist, die bei geöffnetem Sicherheitsventil in den vorderen Druckraum münden. Bei geschlossenem Sicherheitsventil sind diese Durchgangsbohrungen gegenüber dem vorderen Druckraum abgedichtet.

Sowohl der vordere als auch der hintere Druckraum sind über Druckausgleichsleitungen mit dem Überdruckventil und mit dem Steuerventil fluidisch - also unmittelbar oder mittelbar - verbindbar. Diese Druckausgleichsleitungen sind mit Druck beaufschlagt, wenn das jeweilige Ventil (Überdruckventil/Steuerventil) geöffnet ist. Vorzugsweise sind bei geöffnetem Ventil die jeweiligen Druckausgleichsleitungen mit dem am Vordruck-Gaseinlass herrschenden Vordruck beaufschlagt, so dass dann auch der hintere Druckraum der Sicherheitsventilkammer mit diesem Vordruck beaufschlagt ist und das Sicherheitsventil dementsprechend schließt.

Das Steuerventil ist zu diesem Zweck über eine Druckausgleichsleitung mit dem Sicherheitsventil verbunden, über die bei geöffnetem Steuerventil Gas unter Vordruck in das Steuerventil einströmt und das geöffnete Sicherheitsventil schließt.

Über diese Druckausgleichsleitung gelangt bei geöffnetem Steuerventil Gas unter Vordruck in das Steuerventil und von dort über die andere Druckausgleichsleitung in den hinteren Druckraum des Sicherheitsventils, das daraufhin schließt. Dies geschieht, wie oben bei der Beschreibung des Sicherheitsventils erläutert, deswegen, weil der Wirkungsquerschnitt für den auf den Sicherheitsventil-Kolben einwirkenden Gasdruck im hinteren Druckraum größer ist als im vorderen Druckraum. Infolge dieser Differenz im Wirkungsquerschnitt wird der Sicherheitsventil-Kolben bei gleich großen Drücken in den jeweiligen Druckräumen stets in Schließstellung gebracht und gehalten. Als Haltekraft wirkt dabei stets der Vordruck, nicht der Hinterdruck.

Da das Steuerventil der Druckbegrenzungseinrichtung bei zu hohem Hinterdruck öffnen soll, ist es an eine Gasquelle anzuschließen, in der Hinterdruck anliegt. In dem Zusammenhang hat es sich bewährt, wenn das Steuerventil einen Hinterdruck-Gaseinlass für das Gas aufweist, der mit einer Steuerventil-Kammer verbunden ist, welcher bis zu dem vorgegebenen Hinterdruck-Grenzwert mittels eines axial darin beweglichen Steuerventil-Schließelements, vorzugsweise eines Steuerventil-Kolbens, gegen den Hinterdruck-Gaseinlass verschlossen ist, und wobei bei geöffnetem Steuerventil die Druckausgleichsleitungen offen sind und die Steuerventil-Kammer mit dem vorderen Druckraum und mit dem hinteren Druckraum fluidisch verbinden.

Diese Verbindung gewährleistet beispielsweise eine bevorzugte Ausführungsform der erfindungsgemäßen Sicherheitseinrichtung, bei der der Steuerventil-Kolben einen Hohlraum und eine gegenüber der Steuerventil-Kammer bereichsweise abgedichtete Kolbenwandung aufweist, wobei der Hohlraum mit dem hinteren Druckraum fluidisch verbunden ist und mindestens eine Querbohrung hat, welche in einem Bereich durch die Kolbenwandung reicht, der bei geschlossenem Steuerventil abgedichtet ist und der bei geöffnetem Steuerventil mit dem vorderen Druckraum fluidisch verbunden ist.

Der gegen Federkraft innerhalb der Steuerventil-Kammer axial bewegbare Steuerventil-Kolben verfügt an seinem hinteren Ende über einen Hohlraum, der wiederum mit einer Druckausgleichsleitung zum hinteren Sicherheitsventil-Druckraum verbunden ist. Außerdem sind im Hohlraum eine Querbohrung oder mehrere Querbohrungen durch die Kolbenwandung vorgesehen. Bei geschlossenem Steuerventil mündet die als Durchgangsbohrung ausgeführte Querbohrung in einem Bereich der Kolben-Außenwandung, der nach außen abgedichtet ist, beispielsweise zwischen oberhalb und unterhalb der Durchgangsbohrung vorgesehenen Dichtringen. Bei geöffnetem Steuerventil - also bei einem Hinterdruck oberhalb des Grenzwertes - mündet diese Durchgangsbohrung jedoch in einem Bereich der Kolben-Außenwandung, der mit der Druckausgleichsleitung zum vorderen Druckraum der Sicherheitsventil-Kammer verbunden ist.

Über diese fluidische Verbindung gelangt bei geöffnetem Steuerventil Gas unter Vordruck in den Hohlraum des Steuerventil-Kolbens und von dort über die andere Druckausgleichsleitung in den hinteren Druckraum der Sicherheitsventil-Kammer, was zum sofortigen Schließen des Sicherheitsventils führt.

Vorteilhafterweise sind die Steuerventil-Kammer und der Steuerventil-Kolben so ausgelegt, dass bei Offenstellung des Steuerventils ein in Schließrichtung wirkender Druck einen größeren Wirkungsquerschnitt hat als der in Offenrichtung wirkende Druck.

Dadurch, dass die in Schließrichtung auf den Steuerventil-Kolben einwirkenden Kräfte in Summe höher sind als die in Offenrichtung wirkenden Kräfte wird gewährleistet, dass das Steuerventil nach Erreichen der Offenstellung sofort wieder geschlossen wird. Das unter Vordruck stehende und an der Durchgangsbohrung des Kolbens anliegende Gas muss hierzu gegebenenfalls eingeschlossen werden, was ebenfalls durch Dichtungen oberhalb und unterhalb der Durchgangsbohrung geschehen kann, wenn diese ihre Position bei Ventil-Offenstellung eingenommen hat. Zu den in Schließrichtung auf den Steuerventil-Kolben einwirkenden Kräften gehört die Rückstellkraft einer Feder und der Gegendruck aus dem hinteren Druckraum, der ebenfalls dem Vordruck entspricht, dessen Wirkung auf den Steuerventil-Kolben aber durch einen vergleichsweise größeren Wirkungsquerschnitt erhöht werden kann.

Das Steuerventil ist ebenfalls bevorzugt als Kolbenventil ausgeführt. Es kann aber auch ein anderes, dem Kolben äquivalentes Verschlusselement haben, beispielsweise eine Membran.

Hinsichtlich des Überdruckventils der Schnellschlusseinrichtung hat es sich bewährt, wenn diese einen mit dem Vordruck-Gaseinlass verbundenen Überdruckraum aufweist, der eine Überdruckraum-Öffnung aufweist, die mittels eines axial verschiebbaren Schließelements verschlossen ist und der über eine Druckausgleichsleitung mit dem hinteren Druckraum fluidisch verbunden ist.

Beim Überdruckventil entspricht der Eingangsdruck - im Unterschied zum Steuerventil - dem am Vordruck-Gaseinlass und im vorderen Druckraum tatsächlichen herrschenden Vordruck. Diese liegt auch an der Ventilöffnung des Überdruckraums an, beispielsweise über eine fluidisch mit dem vorderen Druckraum verbundene Druckausgleichsleitung. Eine im Überdruckraum vorgesehene Feder gibt die Mindestdruckkraft vor, ab der das Schließelement axial verschoben wird und die Ventilöffnung freigibt. Bei einem Soll-Vordruck bis 25 bar, wie zum Beispiel bei Acetylenbehältern üblich, liegt der Mindestdruck beispielsweise um 30 bar.

Bei geöffnetem Überdruckventil strömt Gas mit dem aktuellen Vordruck über die dafür vorgesehene Druckausgleichsleitung zum hinteren Druckraum. Dadurch wird der Sicherheitsventil-Kolben, wie oben anhand des Steuerventils bereits erläutert, in Schließstellung bewegt, und die weitere Gaszufuhr wird unmittelbar gestoppt. Ein Ausströmenlassen des Gases aus dem Überdruckventil ins Freie ist nicht vorgesehen; die Überdruckkammer ist geschlossen - abgesehen von der genannten Druckausgleichsleitung und etwaigen Gasableitungen zu einer Anzeigevorrichtung und dergleichen.

Das Schließelement wird vorzugsweise mittels einer im Überdruckraum angeordneten Feder gegen die Überdruckraum-Öffnung gepresst, und es hat auf seiner dem Überdruckraum zugewandten Seite einen größeren Druckwirkungsquerschnitt hat als auf seiner gegenüberliegenden Seite.

Durch die Federkraft und die Differenz im Wirkungsquerschnitt ergibt sich eine resultierende Kraft die deutlich in Schließrichtung auf das Schließelement wirkt. Dadurch wird gewährleistet, dass das Überdruckventil nur kurzzeitig geöffnet ist, etwa solange der Druckausgleich zum hinteren Druckraum benötigt. Danach schließt das Sicherheitsventil, so dass im Überdruckraum ein Druck verbleibt, der in etwa so hoch ist wie der Vordruck-Grenzwert oder höher.

Der somit im Überdruckraum verbleibende Druck wirkt zusammen mit der Feder in Schließrichtung auf das Schließelement und verhindert oder erschwert ein erneutes Öffnen des Überdruckventils.

Für den Fall, dass es bei bereits ausgelöstem, also geschossenem Sicherheitsventil zu einem weiteren Druckanstieg in der Vordruckleitung kommen sollte, so ist jedoch zu Gunsten eines verlässlich geschlossenen Sicherheitsventils ein erneutes Öffnen des Überdruckventils sicherzustellen.

Das Überdruckventil und das Sicherheitsventil sind dabei so aufeinander abgestimmt, dass im Fall eines geschossenen Sicherheitsventils die in Schließrichtung auf den Sicherheitsventil-Kolben einwirkenden Kräfte größer sind als die in Schließrichtung auf das Schließelement einwirkenden Kräfte.

Bei erneutem Öffnen des Überdruckventils steigt auch der im hinteren Druckraum anliegende und in Schließrichtung auf den Sicherheitsventil-Kolben wirkende Druck, so dass ein Öffnen des Sicherheitsventils ausgeschlossen ist.

Im Fall, dass das Sicherheitsventil ausgelöst hat, also wegen Überschreitung des Grenzwertes für den Hinterdruck oder Überschreitung des Grenzwertes für den Vordruck die Gaszufuhr unweigerlich unterbrochen ist, steht der hintere Druckraum unter Überdruck. Er enthält Gas und beim Einsatz von Acetylen gegebenenfalls Anteile gasförmiger Acetylen-Zerfallsprodukte. Ein Weiterbetrieb der Sicherheitseinrichtung ist in dem Zustand nicht möglich; sie muss ausgebaut oder - vorzugsweise - entlüftet werden.

Für diesen Zweck ist einer besonders vorteilhaften Ausführungsform der erfindungsgemäßen Sicherheitseinrichtung vorgesehen, dass im Ventilkörper ein Entlüftungsventil aufgenommen ist, das einen Entlüftungsventilraum aufweist, der mittels eines mechanisch betätigbaren und dabei axial verschiebbaren Verschlusselements verschlossen und über eine Druckausgleichsleitung mit dem hinteren Druckraum fluidisch verbunden ist.

Die Störung, die zum Auslösen des Sicherheitsventils geführt hat, ist zu beseitigen. Unabhängig davon, ob Ursache ein erhöhter Hinterdruck oder ein erhöhter Vordruck gewesen ist, kommt das deswegen geöffnete Ventil (Steuerventil / Überdruckventil) automatisch wieder in seine Ausgangsposition - also in Schließstellung. Durch Verschieben des Verschlusselements kann daher der Entlüftungsventilraum gefahrlos geöffnet werden, so dass unter Überdruck stehendes Gas aus dem Entlüftungsventilraum und allen mit diesem fluidisch verbundenen Leitungen und Hohlräumen und insbesondere dem hinteren Druckraum ausströmen kann. Die ausströmende Gasmenge hängt vom Überdruck des Gases und vom gasgefüllten Volumen ab und kann sehr gering sein.

Durch die Druckentlastung im hinteren Druckraum wird der Sicherheitsventil-Kolben aufgrund des im vorderen Druckraum anliegenden Gasdrucks - vorzugsweise unterstützt von einer in der Sicherheitsventil-Kammer angeordneten Feder - zurück in seine Ausgangsposition gebracht. Das Sicherheitsventil ist damit wieder geöffnet und einsatzbereit. Sofern die Wartung zeigt, dass die Sicherheitseinrichtung unversehrt ist, ist ein Ausbau nicht erforderlich.

Der Druck im Entlüftungsventilraum kann bis zu 1000 bar betragen. Ein hoher Druck erschwert das Betätigen des Verschlusselements. In dem Zusammenhang hat es sich bewährt, wenn das Verschlusselement mittels eines Gewindebolzens verschiebbar ist. Dieser kann auch bei hoher Druckkraft leicht ein- oder ausgedreht werden. Gegebenenfalls ist allerdings zu beachten, dass das Entlüftungsventil vor der Wieder-Inbetriebnahme durch Zurückdrehen des Gewindebolzens wieder verschlossen werden muss.

Damit ein Benutzer das Vorliegen einer Störung sofort erkennt, ist bei einer bevorzugten Ausführungsform der Sicherheitseinrichtung vorgesehen, dass im Ventilkörper eine Anzeigevorrichtung aufgenommen ist, die eine Bohrung umfasst, in der ein Sichtelement axial beweglich gelagert ist, unter Abdichtung der Bohrung und unter Belassung eines am Bohrungsboden vorgesehenen Anzeige-Druckraums, welcher über eine Druckleitung mit dem hinteren Druckraum fluidisch verbunden ist.

Beim Auslösen des Sicherheitsventils - aufgrund welcher Ursachen auch immer - wird der hintere Druckraum unter Überdruck gesetzt, der sich über die Druckleitung in den am Bohrungsboden des Anzeigeelements vorgesehenen Anzeige-Druckraum fortpflanzt. Dadurch wird das Anzeigeelement - vorzugsweise gegen die Kraft einer Rückstellfeder - teilweise aus der Bohrung herausgeschoben und ist somit - auch beispielsweise auch aufgrund seiner Signalfarbe - leicht erkennbar. Nach Beseitigung der Störung und etwaiger Entlüftung kann das Anzeigeelement wieder in der Bohrung versenkt werden oder es wird mittels Rückstellfeder automatisch dorthin verbracht.

Im Hinblick auf eine besonders hohe Betriebssicherheit und Verlässlichkeit der Sicherheitseinrichtung hat es sich als vorteilhaft erwiesen, wenn das Steuerventil und/oder das Überdruckventil als vorgefertigte und gekapselte Baugruppe ausgebildet sind.

Die Vorfertigung der Baugruppe (im Folgenden auch als "Patrone" bezeichnet) ermöglicht eine werksseitig exakte Voreinstellung der jeweiligen Funktion und damit eine hohe Betriebssicherheit bei gleichzeitig reproduzierbarer Funktionalität. Die Kapselung verhindert oder erschwert einen unbefugten Eingriff in die Patrone und eine Veränderung der vorgegebenen Einstellung. Zur Kontrolle kann eine Versiegelung vorgesehen sein.

Außerdem ist der Austausch der vorgefertigten Baugruppe im Vergleich zu einem Austausch der einzelnen Bauteile der Baugruppe einfacher, reproduzierbarer und verlässlicher.

Dabei hat es sich besonders bewährt, wenn die vorgefertigte Baugruppe mit einer Abschlusskappe versehen ist, die eine optische Information zum Wartungsstatus trägt.

Bei einer Wartung/Überprüfung der Baugruppe muss die Abschlussklappe entfernt werden, um die ordnungsgemäße Funktion prüfen und gegebenenfalls eine Nachjustierung oder Neueinstellung vornehmen zu können. Dabei kann auch die komplette Baugruppe ausgetauscht werden. Die überprüfte beziehungsweise ausgetauschte Baugruppe trägt danach eine Abschlussklappe, beispielsweise eine Blindkappe, die den letzten Stand der Wartung/Überprüfung anzeigt, ähnlich einer Plakette eines technischen Überwachungsdienstes. Die optische Information kann beispielsweise als farbliche Jahreskennung ausgeführt sein oder eine Datumsanzeige tragen.

### Ausführungsbeispiel

Nachfolgend wird die Erfindung anhand eines Ausführungsbeispiels und einer Zeichnung näher erläutert. Dabei zeigt in schematischer Darstellung:
- **Figur 1**: eine erste Ausführungsform der erfindungsgemäßen Sicherheitseinrichtung in einem Längsschnitt,
- **Figur 2**: einen Ausschnitt von Figur 1 mit dem Sicherheitsventil in vergrößerter Darstellung,
- **Figur 3**: einen Ausschnitt von Figur 1 mit dem Steuerventil in vergrößerter Darstellung,
- **Figur 4**: einen Ausschnitt von Figur 1 mit dem Überdruckventil in vergrößerter Darstellung,
- **Figur 5**: eine weitere Ausführungsform der erfindungsgemäßen Sicherheitseinrichtung in einem Längsschnitt,
- **Figur 6**: einen Ausschnitt von Figur 5 mit dem Sicherheitsventil in vergrößerter Darstellung,
- **Figur 7**: einen Ausschnitt von Figur 5 mit dem Steuerventil in vergrößerter Darstellung,
- **Figur 8**: einen Ausschnitt von Figur 5 mit dem Überdruckventil in vergrößerter Darstellung,
- **Figur 9**: die Ausführungsform der erfindungsgemäßen Sicherheitseinrichtung von Figur 5 in einer Ansicht auf die Längsseite,
- **Figur 10**: die Ausführungsform der erfindungsgemäßen Sicherheitseinrichtung von Figur 5 in einer Ansicht auf die vordere Stirnseite, teilweise geschnitten, und
- **Figur 11**: die Ausführungsform der erfindungsgemäßen Sicherheitseinrichtung von Figur 5 in einer räumlichen Darstellung.

### Beispiel 1

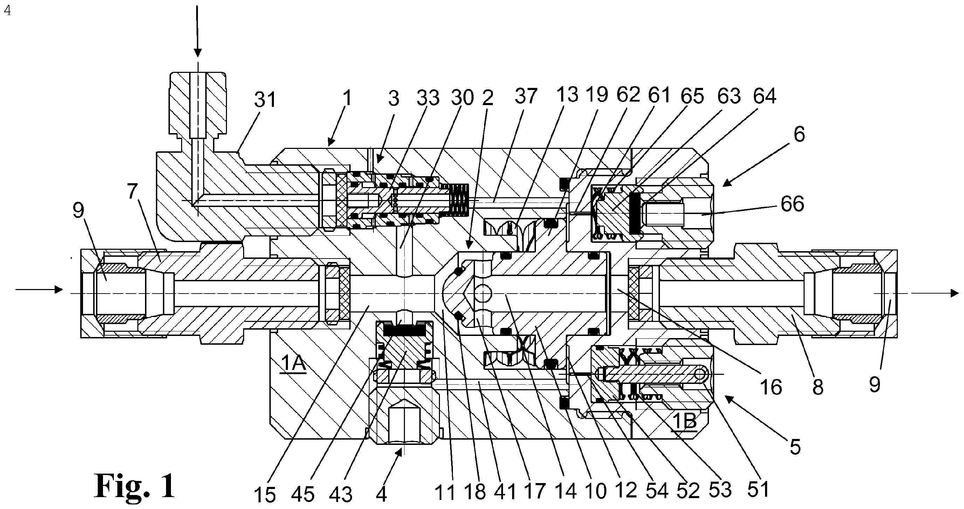

Die in **Figur 1** gezeigte Ausführungsform der Sicherheitseinrichtung ist für den Einbau in die Zufuhrleitung einer Acetylenanlage ausgelegt, mittels der Acetylen aus Flaschen oder Flaschenbündeln bezogen werden. Die Sicherheitseinrichtung ist als Mehrfachventil ausgeführt und wird im Hochdruckbereich der Anlage - vor dem Hauptdruckregler - eingebaut.

Der Ventilkörper 1 besteht aus einem zweiteiligen, im Wesentlichen monolithischen Messingblock. Die beiden Blockteile (Gehäuse 1A und Gehäusedeckel 1B) sind miteinander verschraubt und abgedichtet. Dichtelemente sind in den Figuren 1 bis 4 grundsätzlich als schwarze Flächenelemente dargestellt. Der Ventilkörper 1 weist eine Anzahl von Bohrungen auf, in denen folgende Komponenten untergebracht sind: Ein Sicherheitsventil 2 (Abschlussventil), ein Steuerventil 3, ein Überdruckventil 4, eine Anzeigeeinrichtung 5 und ein Entlüftungsventil 6.

### Sicherheitsventil 2

Der Ventilkörper 1 hat eine zentrale Durchgangsbohrung, in die beidseitig Gasanschlüsse 7; 8 eingeschraubt sind, die zum Anschluss der Sicherheitseinrichtung an die Acetylen-Versorgungsleitung dienen.

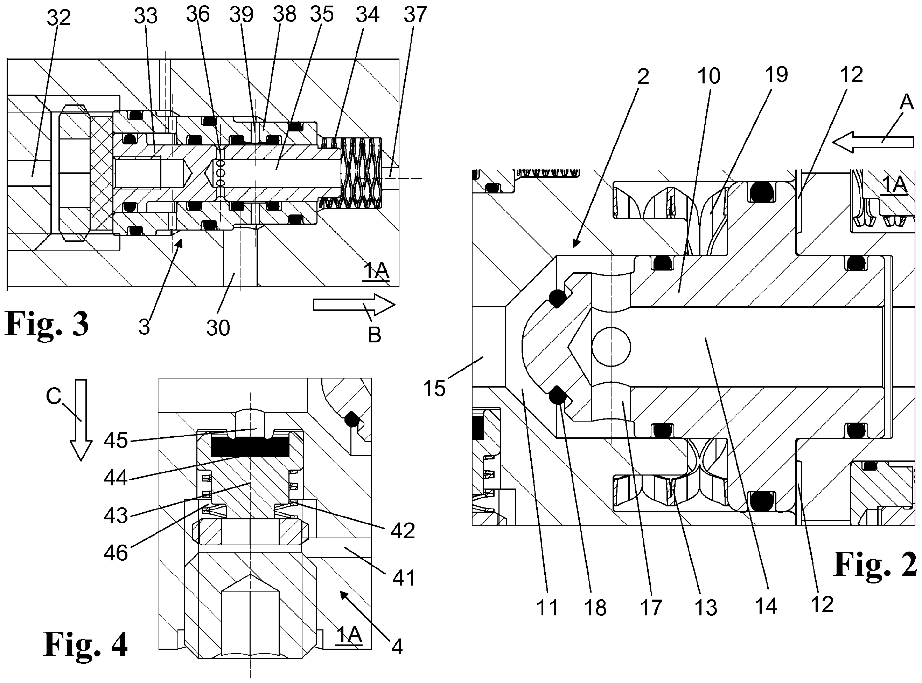

Zwischen einem Gaseinlass 15 und einem Gasauslass 16 ist das Sicherheitsventil 2 als mit dem Vordruck öffnendes Kolbenventil ausgebildet. Dieses Ventil ist in Figur 1 und in vergrößerter Darstellung in **Figur 2** gezeigt. Der Sicherheitsventil-Kolben 10 ist innerhalb der Sicherheitsventil-Kammer axial zwischen einer Ventil-Schließstellung und einer Ventil-Offenstellung bewegbar. Figur 1 zeigt die Offenstellung; die Kolbenbewegung in Schließrichtung ist mit dem Blockpfeil A gekennzeichnet. In Schließstellung unterteilt der Sicherheitsventil-Kolbens 10 die Sicherheitsventil-Kammer in einen vorderen Druckraum 11 und in einen hinteren Druckraum 12.

Der Sicherheitsventil-Kolben 10 verfügt über einen als Sacklochbohrung ausgeführten Hohlraum 14, der strömungsabseitig in den Gasauslass 16 mündet und der über vier durchgehende Querbohrungen 17 mit dem vorderen Druckraum 11 verbunden ist. Er ist als Doppelkolben ausgeführt, dessen Zylindermantel Bereiche mit zwei unterschiedlichen Außendurchmessern aufweist. Der Bereich 19 mit maximalem Außendurchmesser ragt in eine Federkammer, die gegen Zutritt von Acetylen oder Zersetzungsgasen mittels Dichtringen gekapselt ist. An der Oberseite des umlaufenden Bereiches 19 liegt eine Wellenfeder 13 an, die den Kolben 10 im Normalbetrieb in Offenstellung hält. Die Unterseite dieses Bereiches 19 ragt in den hinteren Druckraum 12 und hat dort eine vergleichsweise große Kolbenfläche. Infolgedessen bietet der Sicherheitsventil-Kolben 10 gegenüber dem Gasdruck im hinteren Druckraum 12 einen größeren Wirkungsquerschnitt als gegenüber dem Gasdruck im vorderen Druckraum 11.

Die Figuren1 und 2 zeigen das Sicherheitsventil 2 in Offenstellung. Wie von den beiden Richtungspfeilen angezeigt, strömt das vom Vordruck-Gaseinlass 15 kommende Acetylengas in den vorderen Druckraum 11 und über die Querbohrungen 17 in den Hohlraum 14 und von dort ungehindert zum Vordruck-Gasauslass 16.

Bei geschlossenem Sicherheitsventil 2 liegt der Sicherheitsventil-Kolben 10 mit einem am vorderen Kolbenende vorgesehenen Dichtring 18 an der Innenwandung der Sicherheitsventilkammer an, so dass die Querbohrungen 17 gegenüber dem vorderen Druckraum 11 abgedichtet sind. Infolge der unterschiedlichen Wirkungsquerschnitte im vorderen und hinteren Druckraum 11; 12 ist gewährleistet, dass der Sicherheitsventil-Kolben 10 bei gleich großen Drücken in den jeweiligen Druckräumen 11, 12 stets in Schließstellung gebracht und gehalten wird. Als Haltekraft wirkt dabei stets der im hinteren Druckraum 12 herrschende Druck. Dabei handelt es sich stets um den Vordruck, wie im Folgenden noch näher erläutert wird.

Bei geschlossenem Sicherheitsventil 2 ist die weitere Zufuhr von Acetylengas unterbrochen. Das Sicherheitsventil 2 wird geschlossen, wenn entweder das Steuerventil 3 oder das Überdruckventil 4 geöffnet sind. Das Sicherheitsventil 2 schließt außerdem bei einem Druckanstieg von der Seite des Gasauslasses 8 her, wie er beispielsweise bei einer Zerfall von Acetylen in der betreffenden Gasleitung zwischen der Sicherheitseinrichtung und dem Hauptdruckregler auftreten kann. Insoweit wirkt das Sicherheitsventil 2 auch als Rückschlagventil.

### Steuerventil 3

Das Steuerventil 3 ist in eine weitere Bohrung des Ventilkörpers 1 eingesetzt. Diese verläuft parallel zur Mittenbohrung für das Sicherheitsventil 2.

Das Steuerventil 3 ist in Figur 1 und in vergrößerter Darstellung in **Figur 3** gezeigt. Es ist Teil einer Begrenzungseinrichtung für den Hinterdruck. Dieser ist standardmäßig auf 1,5 bar eingestellt. Das Steuerventil 3 dient dazu, die Acetylenzufuhr zu unterbrechen, wenn der Hauptdruckregler eine nennenswerte Regelabweichung oder einen Defekt zeigt, was sich in einem allmählichen oder plötzlichen Anstieg des Hinterdrucks zeigt. Der Grenzwert ist auf 20% oberhalb des Sollwertes festgelegt, also auf 1,8 bar. Ab diesem Druck öffnet das Steuerventil 3.

Dem Steuerventil 3 wird zu diesem Zweck aus dem Hinterdruckbereich des Hauptdruckreglers über eine von als Richtungspfeil symbolisierte Bypass-Leitung, die an der Eckverschraubung 31 endet, Acetylengas mit Hinterdruck zugeführt. Das Steuerventil 3 ist im Normalfall geschlossen. In dem Fall genügt der an dem Hinterdruck-Gaseinlass 32 für das Acetylengas anliegende Gasdruck nicht, um den Steuerventil-Kolben 33 gegen den Druck einer am gegenüberliegenden Ende anliegenden Wellenfeder 34 in Offenrichtung zu bewegen. Die Kolbenbewegung in Öffnungsrichtung ist mit dem Blockpfeil B gekennzeichnet.

Ähnlich wie der Sicherheitsventil-Kolben 10 verfügt auch der Steuerventil-Kolben 33 über einen als Sacklochbohrung ausgeführten Hohlraum 35, der über Querbohrungen 36 an die Kolbenaußenwand geführt ist. Der Hohlraum 35 ist mit dem hinteren Druckraum 12 des Sicherheitsventils 2 über eine Druckausgleichsleitung 37 fluidisch verbunden. Die Querbohrungen 36 erreichen die Kolbenaußenwand in einem Längenabschnitt, der bei geschlossenem Steuerventil 3 durch beiderseits vorgesehene Dichtringe nach außen gekapselt ist. Durch die Verschiebung des Steuerventil-Kolbens 33 in Öffnungsrichtung gelangt der betreffende Längenabschnitt schließlich in Flucht zu abgedichteten Querbohrungen 39 der Ventilbuchse 38. Das Steuerventil 3 ist damit geöffnet. An der Querbohrung 39 liegt Vordruck dauerhaft an, denn sie ist über die weitere Druckausgleichsleitung 30 und den Gaseinlass 15 mit dem vorderen Druckraum 11 fluidisch verbunden.

Übersteigt der Hinterdruck den voreingestellten Grenzwert von 1,8 bar, öffnet somit das Steuerventil 3 die fluidische Verbindung zum vorderen Druckraum 11 der Sicherheitsventil-Kammer, so dass Acetylengas unter Vordruck in den Hohlraum 35 des Steuerventil-Kolbens 33 und von dort über die Druckausgleichsleitung 37 in den hinteren Druckraum 12 der Sicherheitsventil-Kammer gelangt, was zum sofortigen Schließen des Sicherheitsventils 2 führt, wie oben erläutert.

Somit sind bei geöffnetem Steuerventil 3 die Druckausgleichsleitungen 30; 37 offen und über den Steuerventil-Kolben 33 miteinander verbunden und damit der vordere Druckraum 11 und der hintere Druckraum 12 auf gleichem Druck, nämlich auf Vordruck, so dass das Sicherheitsventil 2 schließt.

### Überdruckventil 4

Das Überdruckventil 4 ist ebenfalls in eine Bohrung im Ventilkörper eingesetzt, die senkrecht zur Mittenbohrung verläuft. Das Überdruckventil 4 ist in Figur 1 und in vergrößerter Darstellung in **Figur 4** gezeigt. Es ist Teil der automatischen Schnellschlusseinrichtung. Der Betriebsdruck (Vordruck) in der Acetylen-Zufuhrleitung liegt je nach Füllungsgrad des Acetylenbehälters zwischen 4 und 25 bar. Das Überdruckventil 4 dient zur Unterbrechung des Acetylengasstroms, sobald der Vordruck 20% des maximalen Betriebsdrucks - also 30 bar - übersteigt.

Hierzu weist das Überdruckventil 4 einen Überdruckraum 46 auf, in dem eine Wellenfeder 42 einen axial verschiebbaren Schieber 43 mit Dichtlippe 44 gegen eine Öffnung presst und diese so verschließt. An dieser Öffnung liegt über eine mit dem Vordruck-Gaseinlass 15 verbundene Druckausgleichsleitung 45 der aktuell herrschende Vordruck des Acetylengases dauerhaft an.

Die Figuren 1 und 4 zeigen die Geschlossenstellung; die Kolbenbewegung in Öffnungsrichtung ist mit dem Blockpfeil C gekennzeichnet. Bei geöffnetem Überdruckventil 4 strömt Acetylengas mit dem aktuellen Vordruck über eine Druckausgleichsleitung 41 zum hinteren Druckraum 12, so dass das Sicherheitsventil 2 schließt.

Der Schieber 43 bietet auf seiner dem Überdruckraum zugewandten Seite einen größeren Druckwirkungsquerschnitt hat als auf seiner gegenüberliegenden Seite, so dass sich zusammen mit der Federkraft der Wellenfeder 42 eine resultierende Kraft in Schließrichtung ergibt. Dadurch wird gewährleistet, dass das Überdruckventil 4 nur kurzzeitig geöffnet ist.

Auch bei weiter steigendem Vordruck soll das Sicherheitsventil 2 in jedem Fall geschlossen bleiben. Das Überdruckventil 4 kann hingegen öffnen. Konstruktiv wird dies durch die Federkräfte der jeweiligen Wellenfedern 13; 42 und die Differenz der in Schließrichtung wirkenden Druckwirkungsflächen der jeweiligen Schließkolben 10; 19; 43 erreicht. Insgesamt sind Überdruckventil 4 und Sicherheitsventil 2 somit so aufeinander abgestimmt, dass bei geschossenem Sicherheitsventil 2 die in Schließrichtung auf den Sicherheitsventil-Kolben 10 (genauer: auf den erweiterten Durchmesserbereich 19) einwirkenden Kräfte größer sind als die in Schließrichtung auf den Schieber 43 einwirkenden Kräfte.

Im normalen Betrieb sind somit Überdruckventil 4 und Steuerventil 3 geschlossen; das Sicherheitsventil 2 ist offen und ermöglicht den ungehinderten Gasfluss. Das Sicherheitsventil 2 schließt die Acetylen-Versorgungsleitung jedoch unmittelbar ab, wenn entweder das Überdruckventil 4 oder das Steuerventil 3 öffnet. Es erfüllt damit die Vorgaben für ein druckgesteuertes Absperrventil gemäß EN ISO 14114:1999; Anhang B, die Norm-Vorgaben für eine automatische Schnellschlusseinrichtung gemäß EN ISO 1411:1999; Absatz 3.6.2 und für eine Druckbegrenzungseinrichtung gemäß EN ISO 14114:1999, Absatz 3.7.

### Entlüftungsventil 6

Wenn das Sicherheitsventil 2 wegen Überschreitung des Grenzwertes für den Hinterdruck oder Überschreitung des Grenzwertes für den Vordruck geschlossen ist, ist ein Weiterbetrieb der Sicherheitseinrichtung nicht ohne weiteres möglich.

Der hintere Druckraum 12 steht in diesem Zustand unter Druck. Zur Entlüftung ist im Ventilkörper 1 ein Entlüftungsventil 6 vorgesehen. Das Entlüftungsventil 6 ist in eine weitere Bohrung des Ventilkörpers 1 eingesetzt, die parallel zur Mittenbohrung verläuft. Es hat einen Entlüftungsventilraum 61, der über eine Druckausgleichsleitung 62 mit dem hinteren Druckraum 12 verbunden ist. Der Entlüftungsventilraum 61 ist mittels einer Kappe 63 mit Dichtlippe 64 verschlossen. Diese kann mittels eines Gewindestiftes 66 in Richtung des Entlüftungsventilraums 61 gedrückt werden (in der Darstellung von Figur 1 nach links). Dabei wird der Entlüftungsventilraum 61 geöffnet, so dass das unter Druck stehende Acetylengas aus dem Entlüftungsventilraum 61 und allen mit diesem fluidisch verbundenen Leitungen und Hohlräumen und insbesondere aus dem hinteren Druckraum 12 ausströmen kann. Nach Zurückdrehen des Gewindestiftes 66 wird die Kappe 63 aufgrund der Rückstellkraft einer Feder 65 wieder in die Ausgangsposition gebracht, so dass das Entlüftungsventil 6 wieder geschlossen ist.

Aufgrund der Entlüftung wird der Sicherheitsventil-Kolben 10 aufgrund des im vorderen Druckraum 11 anliegenden Gasdrucks und unterstützt von der Druckfeder 13 wieder in seine Ausgangsposition gebracht, so dass das Sicherheitsventil 2 somit wieder offen und einsatzbereit ist.

### Auslösungsanzeige 5

Auch für die Aufnahme der Auslösungsanzeige 5 ist im Ventilkörper 1 eine Bohrung vorgesehen. Diese verläuft parallel zur Mittenbohrung. Die Auslösungsanzeige 5 zeigt das Vorliegen einer Störung an. Zu diesem Zweck ist in der Bohrung ein farbiger Anzeigestift 51 mit einem gegen die Innenwandung abgedichteten Fuß 52 aufgenommen, der am Bohrungsboden anliegt. Der Bohrungsboden ist über eine Druckausgleichsleitung 54 mit dem hinteren Druckraum 12 verbunden.

Bei geschlossenem Sicherheitsventil 2 wird der hintere Druckraum 12 unter Druck gesetzt, der sich über die Druckausgleichsleitung 54 zum Bohrungsboden des Anzeigeelements 5 fortpflanzt und dadurch den Anzeigestift 51 gegen die Kraft einer am Fuß 52 anliegenden Rückstellfeder 53 aus der Bohrung herausschiebt (in der Darstellung von Figur 1 nach rechts). Nach Beseitigung der Störung und der Entlüftung über das Entlüftungsventil 6 wird der Anzeigestift 51 mittels der Rückstellfeder 53 automatisch wieder in der Bohrung versenkt.

### Beispiel 2

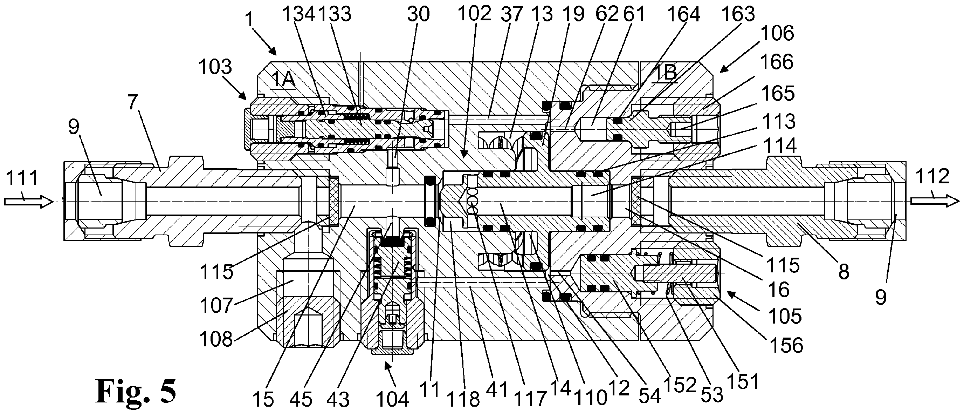

Im Folgenden wird eine gegenüber Figur 1 modifizierte Ausführungsform der erfindungsgemäßen Sicherheitseinrichtung anhand der **Figuren 5 bis 11** erläutert. Wie aus den Figuren erkennbar, ist bei dieser Ausführungsform eine Anzahl von Dichtungsringen paarweise ausgelegt, wobei jeweils einer der beiden Dichtringe als sogenannter "Opferring" dient. Wird dieser bei einem Acetylen-Zerfall zerstört, gewährleistet der andere Dichtring immer noch die Dichtfunktion. Weiterhin sind einige der in den Ventilkörper 1 integrierten Einzelventile als vorgefertigte, abgeschlossene Baueinheiten, sogenannte "Patronen" ausgeführt, die werksseitig montiert und eingestellt werden können.

Diese und weitere Unterschiede werden im Folgenden näher erläutert. Sofern dabei dieselben Bezugsziffern verwendet werden, wie in den Figuren 1 bis 4, so sind damit gleiche oder äquivalente Bauteile oder Bestandteile der Sicherheitseinrichtung bezeichnet, wie für die Ausführungsform von Beispiel 1 bereits erläutert.

Die Sicherheitseinrichtung ist für den Einbau in die Zufuhrleitung einer Acetylenanlage ausgelegt, mittels der Acetylen aus Flaschen oder Flaschenbündeln bezogen werden. Die Sicherheitseinrichtung ist als Mehrfachventil ausgeführt und wird im Hochdruckbereich der Anlage - vor dem Hauptdruckregler - eingebaut.

Der Ventilkörper 1 besteht auch hier aus einem zweiteiligen, im Wesentlichen monolithischen und zylinderförmigen Messingblock mit zwei miteinander verschraubten und abgedichteten Blockteilen (Gehäuse 1A und Gehäusedeckel 1B).

Auch hier sind Dichtelemente als schwarze Flächenelemente dargestellt. Sowohl das Gehäuse 1A als auch der Gehäusedeckel 1B weisen Bohrungen auf, in denen folgende Komponenten untergebracht sind: Ein Sicherheitsventil 102 (Abschlussventil), ein Steuerventil 103 und ein Überdruckventil 104 im Gehäuse 1A und eine Anzeigeeinrichtung 105 und ein Entlüftungsventil 106 im Gehäusedeckel 1B.

### Sicherheitsventil 102

Der Ventilkörper 1 hat eine zentrale Durchgangsbohrung, in die beidseitig Gasanschlüsse 7; 8 eingeschraubt sind, die zum Anschluss der Sicherheitseinrichtung an die Acetylen-Versorgungsleitung dienen. Bei der in **Figur 5** gezeigten Ausführungsform liegen die Gasanschlüsse 7, 8 in gerader Anordnung zueinander. Für eine alternative, abgewinkelte Anordnung ist im Ventilkörper 1 eine Anschlussbohrung 107 vorbereitet, die mit einem Blindstopfen 108 verschlossen ist. Je nach den Gegebenheiten vor Ort kann somit die Sicherheitseinrichtung entweder in der gestreckten oder in der abgewinkelten Anschlussvariante eingesetzt werden.

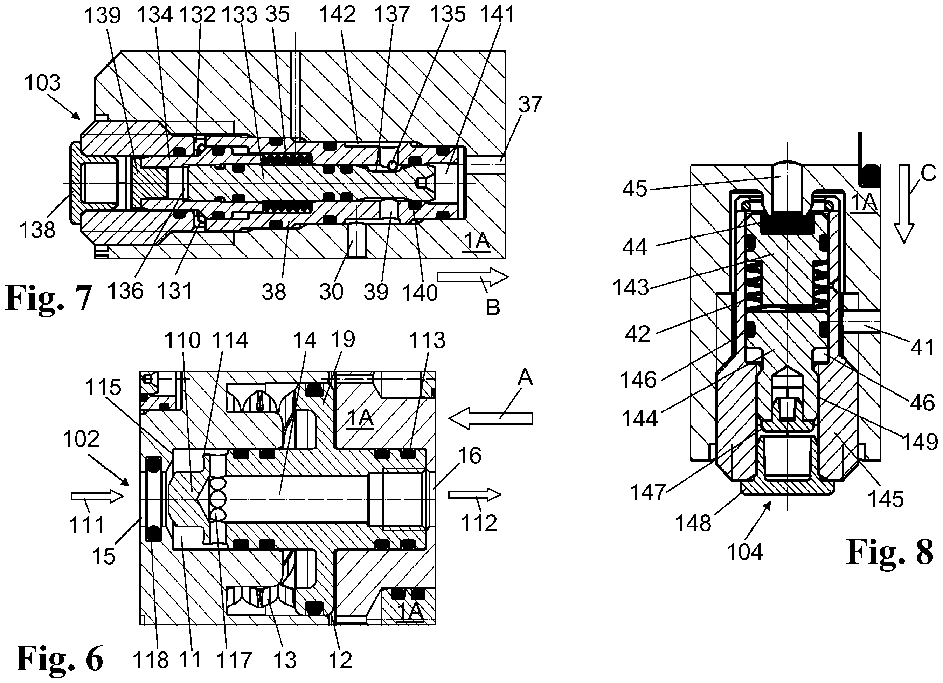

Zwischen einem Gaseinlass 15 und einem Gasauslass 16 ist das Sicherheitsventil 102 als mit dem Vordruck öffnendes Kolbenventil ausgebildet. Dieses Ventil ist in Figur 5 und in vergrößerter Darstellung in **Figur 6** gezeigt. Der Sicherheitsventil-Kolben 110 ist innerhalb der Sicherheitsventil-Kammer axial zwischen einer Ventil-Schließstellung und einer Ventil-Offenstellung bewegbar. Figur 5 zeigt die Offenstellung; die Kolbenbewegung in Schließrichtung ist in Figur 6 mit dem Blockpfeil A gekennzeichnet. In Schließstellung unterteilt der Sicherheitsventil-Kolben 110 die Sicherheitsventil-Kammer in einen vorderen Druckraum 11 und in einen hinteren Druckraum 12.

Der Sicherheitsventil-Kolben 110 verfügt über einen als Sacklochbohrung ausgeführten Hohlraum 14, der strömungsabseitig in den Gasauslass 16 mündet und der über eine Vielzahl durchgehender Querbohrungen 117 mit dem vorderen Druckraum 11 verbunden ist. Er ist als Doppelkolben ausgeführt, dessen Zylindermantel Bereiche mit zwei unterschiedlichen Außendurchmessern aufweist.

Der Bereich 19 mit maximalem Außendurchmesser ragt in eine Federkammer, die gegen Zutritt von Acetylen oder Zersetzungsgasen mittels Dichtringen gekapselt ist. An der Oberseite des umlaufenden Bereiches 19 liegt eine Wellenfeder 13 an, die den Kolben 110 im Normalbetrieb in Offenstellung hält. Die Unterseite dieses Bereiches 19 ist in ragt in den hinteren Druckraum 12 und hat dort eine vergleichsweise große Kolbenfläche. Infolgedessen bietet der Sicherheitsventil-Kolben 110 gegenüber dem Gasdruck im hinteren Druckraum 12 einen größeren Wirkungsquerschnitt als gegenüber dem Gasdruck im vorderen Druckraum 11.

Der Außenmantel des Kolbens 110 ist beidseitig des erweiterten Durchmesserbereichs 19 mittels O-Ringen gegenüber der Bohrung des Ventilkörpers 1 abgedichtet. Diese O-Ringe sind in Nuten des Kolbens 110 integriert und jeweils paarweise ausgelegt, wobei einer der O-Ringe als Opfer-O-Ring dient. Der Opfer-O-Ring ist dabei derjenige, der bei einem Acetylenzerfall, bei dem Drücke von mehr als 1000 bar und hohe Temperaturen auftreten können, als erster den Zerfallsbedingungen ausgesetzt ist. Im Fall des strömungsabseitigen O-Ringpaares ist dies exemplarisch der mit Bezugsziffer 113 bezeichnete O-Ring; diese wird im Fall rückströmender Zerfallsprodukte durch Zerfall von Acetylen in der Gasleitung zwischen der Sicherheitseinrichtung und dem Hauptdruckregle als erster belastet.

Die Figuren 5 und 6 zeigen das Sicherheitsventil 102 in Offenstellung. Wie von den beiden Richtungspfeilen 111 und 112 angezeigt, strömt das vom Vordruck-Gaseinlass 15 kommende Acetylengas in den vorderen Druckraum 11 und über die Querbohrungen 117 in den Hohlraum 14 und von dort ungehindert zum Vordruck-Gasauslass 16.

Bei geschlossenem Sicherheitsventil 102 liegt der Sicherheitsventil-Kolben 110 mit seinem vorderen Kolbenende an einem Dichtring 118 an, der in eine umlaufende Nut der Innenwandung des Gaseinlasses 15 eingelassen ist. Der auf diese Weise in den Ventilkörper 1 integrierte Dichtring 118 bleibt auch bei hoher mechanischer Beanspruchung in der Nut fest fixiert.

Als zusätzliche Schutzmaßnahme verfügt der Sicherheitsventil-Kolben 110 über eine umlaufende, metallische Dichtkante 114 (Figur 6), die an einem Kolbenabsatz vorgesehen ist und dabei in Schließrichtung A weist. Im Fall eines Acetylenzerfalls wird das Ende des Kolbens 110 gegen den Dichtring 118 und gleichzeitig die Dichtkante 114 gegen eine Dichtfläche 115 des Ventilgehäuse 1 geschlagen, so dass eine dichte metallischen Kontaktfläche entsteht, die sogar bei einem Ausfall des Dichtrings 118 zur Abdichtung beiträgt und die weitere Zufuhr von Acetylengas unterbricht oder zumindest nennenswert verringert.

Im Geschlossenzustand sind die Querbohrungen 117 gegenüber dem vorderen Druckraum 11 abgedichtet. Infolge der unterschiedlichen Wirkungsquerschnitte im vorderen und hinteren Druckraum 11; 12 ist gewährleistet, dass der Sicherheitsventil-Kolben 110 in Schließstellung gebracht und gehalten wird. Als maximale Haltekraft wirkt dabei der im hinteren Druckraum 12 herrschende Druck. Dabei handelt es sich um den Vordruck, wie im Folgenden noch näher erläutert wird.

Bei geschlossenem Sicherheitsventil 102 ist die weitere Zufuhr von Acetylengas unterbrochen. Das Sicherheitsventil 102 wird geschlossen, wenn entweder das Steuerventil 103 oder das Überdruckventil 104 geöffnet sind. Das Sicherheitsventil 102 schließt außerdem bei einem Druckanstieg von der Seite des Gasauslasses 8 her, wie er beispielsweise bei einer Zerfall von Acetylen in der betreffenden Gasleitung zwischen der Sicherheitseinrichtung und dem Hauptdruckregler auftreten kann. Insoweit wirkt das Sicherheitsventil 102 auch als Rückschlagventil.

Um ein festgeschlagenes Sicherheitsventil 102 leichter aus dem Ventilgehäuse 1 demontieren zu können, ist das ausgangsseitige Ende des Kolbens 110 mit einem Innengewinde 114 versehen. Um die Gefahr eines Eintrags fester Zerfallsprodukte, wie etwa Spänen, in das Sicherheitsventil 102 und insbesondere in den Dichtungsbereich der Dichtringe zu vermindern, sind vor den Gaseingang 15 und den Gasausgang 16 Edelmetallfilterscheiben 115 eingesetzt.

### Steuerventil 103

Das Steuerventil 103 ist als vorgefertigte, abgeschlossene und werkseitig voreingestellte Baugruppe ausgeführt, die auch als "als Steuerventil-Patrone" bezeichnet werden kann. Die Steuerventil-Patrone ist in eine weitere Bohrung des Ventilkörpers 1 eingesetzt. Diese verläuft parallel zur Mittenbohrung für das Sicherheitsventil 102.

Das Steuerventil 103 ist in Figur 5 und in vergrößerter Darstellung in **Figur 7** gezeigt. Es ist Teil einer Begrenzungseinrichtung für den Hinterdruck. Das Steuerventil 103 dient dazu, die Acetylenzufuhr zu unterbrechen, wenn der Hauptdruckregler eine nennenswerte Abweichung vom Nominaldruck oder einen Defekt zeigt, was sich in einem allmählichen oder plötzlichen Anstieg des Hinterdrucks zeigt.

Die Höhe des Hinterdrucks entspricht dem Nominaldruck am Verbraucher. Bei Niederdruck-Anwendungen liegt er um 0,8 bar, bei Mitteldruck-Anwendungen um 1,2 bar und bei Hochdruck-Anwendungen um 1,5 bar. Der Auslöse-Grenzdruck für das Steuerventil 103 liegt etwa 20% oberhalb des jeweiligen Nominalwertes und wird werkseitig voreingestellt, beispielsweise auf 1,5 bar für den Mitteldruckbereich. Der Auslöse-Grenzdruck kann aber auch noch im laufenden Betrieb nachgestellt werden, wie weiter unten noch näher erläutert wird.

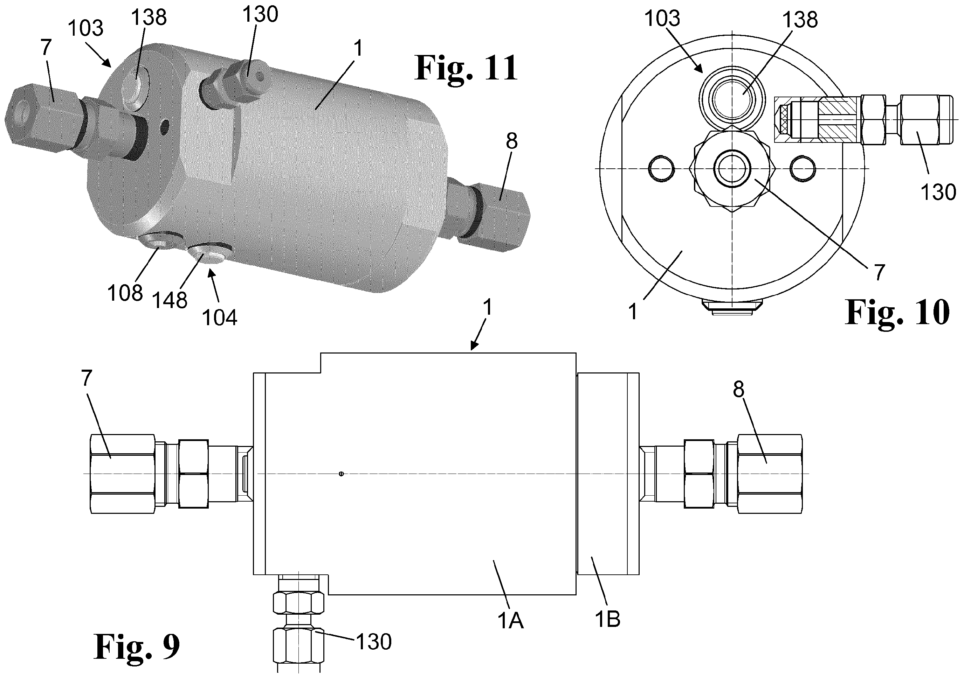

Dem Steuerventil 103 wird aus dem Hinterdruckbereich des Hauptdruckreglers über eine Bypass-Leitung Acetylengas mit Hinterdruck zugeführt. Der Anschluss der Bypass-Leitung zum Steuerventil 103 erfolgt über die Mantelfläche des Ventilkörpers 1 und ist in den Figuren 9, 10 und 11 als seitliche Einschraubung 130 erkennbar. Dieser Anschluss mündet in einem Hinterdruck-Gasraum 132 innerhalb der Steuerventil-Patrone (103), der in Figur 7 als schmaler beidseitig abgedichteter Hohlraum erkennbar ist, in dem ein Sprengring 131 liegt.

Das Steuerventil 103 ist im Normalfall geschlossen. In dem Fall genügt der an dem Hinterdruck-Gasraum 132 für das Acetylengas anliegende Gasdruck nicht, um den Steuerventil-Kolben (133; 134) gegen den Druck einer anliegenden Wellenfeder 34 in Öffnungsrichtung zu bewegen. Die Kolbenbewegung in Öffnungsrichtung ist mit dem Blockpfeil B gekennzeichnet.

Die Steuerventil-Patrone ist nach außen mittels einer Blindkappe 138 und eines Pfropfens 139 abgeschlossen, der in einen mit Innensechskant ausgebildeten Kolbenkopf 134 eingesetzt ist. Der Pfropfen 139 soll einen unberechtigten Zugriff auf die Steuerventil-Patrone erschweren und unbeabsichtigte Veränderungen der Einstellung verhindern. Die Blindkappe 138 ist mit einem Prüfsiegel versiegelt und farblich gestaltet, wobei ihre Farbe den aktuellen Überprüfungsstatus (beispielsweise das letzte Überprüfungsjahr) anzeigt.

Der Auslöse-Grenzdruck des Steuerventils 103 kann korrigiert oder auf einen anderen Wert eingestellt werden. Zu diesem Zweck ist der Steuerventil-Kolben zweigeteilt in einen Kolbenkopf 134 und in eine Kolbenstange133, die über ein Gewinde 136 miteinander verbunden sind. Über diese Gewindeverbindung 136 ist die Gesamtlänge des Steuerventil-Kolbens (133; 134) veränderbar. Bei einer Verlängerung des Steuerventil-Kolbens (133; 134) verkürzt sich der Hubweg für das Auslösen des Ventils - und umgekehrt, verlängert sich der Hubweg bei einer Verkürzung des Kolbens (133; 134).

Zur Einstellung des Auslöse-Grenzdrucks des Steuerventils 103 werden Blindkappe 138 und Pfropfen 139 abgenommen und mittels des dann zugänglichen Innensechskants das Gewinde 136 zwischen Kolbenstange 133 und Kolbenkopf 134 verdreht. Diese Einstellung ist auch während des Betriebs möglich, da der zugängliche Bereich des Innensechskants mittels eines O-Rings vom übrigen Ventilraum abgeschlossen ist. Die Kolbenstange 133 ist mit einer seitlichen Abflachung 137 versehen, an der ein Stift 135 anliegt. Dadurch wird beim Betätigen der Gewindeverbindung 136 das Mitdrehen der Kolbenstange 133 verhindert.

Die Figuren 5 und 7 zeigen das Steuerventil 103 in geschlossenem Zustand. Die Ventilbuchse 38 ist mit Querbohrungen 39 versehen, die beiderseits abgedichtet sind. Eine dieser Abdichtungen erfolgt über einen in einer Nut der Ventilbuchse 38 eingelegten O-Ring 140, der an einem Längenabschnitt der Kolbenstange 133 anliegt, der an den Abflachungsbereich angrenzt. Die Querbohrungen 39 selbst liegen im Abflachungsbereich 137 der Kolbenstange 133 und sind über eine Abdrehung 142 der Kolbenstange 133 mit einer Druckausgleichsleitung 30 verbunden. An dieser liegt Vordruck dauerhaft an, denn sie ist über den Gaseinlass 15 mit dem vorderen Druckraum 11 fluidisch verbunden.

Am ausgangsseitigen Ende der Kolbenstange 133 ist ein hinterer Gasraum 141 vorgesehen, der über eine weitere Druckausgleichsleitung 37 mit dem hinteren Druckraum 12 des Sicherheitsventils 102 verbunden ist.

Der Hinterdruck-Gasraum 132 ist mittels O-Ringen sowohl von der Druckausgleichsleitung 30 als auch von der Druckausgleichsleitung 37 gasdicht abgeschlossen. Bei geschlossenem Steuerventil 103 ist auch die fluidische Verbindung zwischen den besagten Druckausgleichsleitungen 30 und 37 getrennt. Durch eine Verschiebung der Kolbenstange 133 in Öffnungsrichtung (Richtungspfeil B) gelangt jedoch die zur Abflachung 137 der Kolbenstange 133 führende Abschrägung in den Dichtbereich des O-Rings 140. Der O-Ring 140 kann den Abschrägungsbereich und die Abflachung 137 nicht abdichten, so dass die besagten Druckausgleichsleitungen 30 und 37 miteinander verbunden sind und damit das Steuerventil 103 geöffnet ist.

Übersteigt der Hinterdruck im Hinterdruck-Gasraum 132 den voreingestellten Grenzwert, öffnet somit das Steuerventil 103 die fluidische Verbindung zum vorderen Druckraum 11 der Sicherheitsventil-Kammer, so dass Acetylengas unter Vordruck in den Hohlraum 141 und von dort über die Druckausgleichsleitung 37 in den hinteren Druckraum 12 der Sicherheitsventil-Kammer gelangt, was zum sofortigen Schließen des Sicherheitsventils 102 führt, wie oben erläutert.

Somit sind bei geöffnetem Steuerventil 103 die Druckausgleichsleitungen 30; 37 offen und über den Steuerventil-Kolben 133 miteinander verbunden und damit der vordere Druckraum 11 und der hintere Druckraum 12 auf gleichem Druck, nämlich auf Vordruck, so dass das Sicherheitsventil 102 schließt.

### Überdruckventil 104

Das Überdruckventil 104 ist ebenfalls als vorgefertigte, in sich abgeschlossene und werkseitig voreingestellte Baugruppe ausgeführt, die auch als "Überdruckventil-Patrone" bezeichnet werden kann. Die Überdruckventil-Patrone ist in eine Bohrung im Ventilkörper 1 eingesetzt, die senkrecht zur Mittenbohrung für das Sicherheitsventil 102 verläuft. Das Überdruckventil 104 ist in Figur 5 und in vergrößerter Darstellung in **Figur 8** gezeigt. Es ist Teil der automatischen Schnellschlusseinrichtung.

Der Betriebsdruck (Vordruck) in der Acetylen-Zufuhrleitung liegt je nach Füllgrad des Acetylenbehälters zwischen 4 und 25 bar. Das Überdruckventil 104 dient zur Unterbrechung des Acetylengasstroms, sobald der Vordruck 20% des maximalen Betriebsdrucks übersteigt. Der Auslöse-Grenzdruck wird werkseitig voreingestellt, beispielsweise auf 30 bar, kann aber auch im druckbeaufschlagten Zustand einbeziehungsweise nachgestellt werden.

Hierzu ist der Überdruckventil-Kolben zweiteilig mit Kolbenschieber 143 und Vorspannkolben 144 ausgeführt. Zwischen diesen Bauteilen (143, 144) ist eine Wellenfeder 42 eingesetzt. Der Vorspannkolben 144 ist in die Überdruckventil-Kolbenbuchse 145 über ein Gewinde 149 eingeschraubt und an ihrer von oben zugänglichen Stirnseite mit Innensechskant versehen. Der Innensechskant ist nach außen mittels eines Pfropfens 147 verschlossen und die Überdruckventil-Patrone (104) ergänzend dazu mittels einer Blindkappe 148 abgeschlossen. Die Blindkappe 148 zeigt durch ihre Farbe den aktuellen Wartungs- oder Überprüfungszustand an, wie oben für das Steuerventil 103 bereits erläutert. Nach Entfernen von Blindkappe 148 und Pfropfen 147 ist der Innensechskant des Vorspannkolbens 144 zugänglich, so dass durch Verdrehen desselben die Federvorspannung der Wellenfeder 42 verändert und damit der Auslöse-Grenzdruck korrigiert oder neu eingestellt werden kann.

Das Überdruckventil 104 weist in üblicher Weise einen mittels O-Ring 146 abgedichteten Überdruckraum 46 auf. Der axial verschiebbare Kolbenschieber 143 mit Dichtlippe 44 wird gegen den Druck der Wellenfeder 42 gegen eine Öffnung gepresst und verschließt diese. An dieser Öffnung liegt über eine mit dem Vordruck-Gaseinlass 15 verbundene Druckausgleichsleitung 45 der aktuell herrschende Vordruck des Acetylengases dauerhaft an.

Die Figuren 5 und 8 zeigen die Geschlossenstellung; die Kolbenbewegung in Öffnungsrichtung ist mit dem Blockpfeil C gekennzeichnet. Bei geöffnetem Überdruckventil 104 strömt Acetylengas mit dem aktuellen Vordruck über eine Druckausgleichsleitung 41 zum hinteren Druckraum 12, so dass das Sicherheitsventil 102 schließt.

Der Kolbenschieber 143 bietet auf seiner dem Überdruckraum 45 zugewandten Seite einen größeren Druckwirkungsquerschnitt hat als auf seiner gegenüberliegenden Seite, so dass sich zusammen mit der Federkraft der Wellenfeder 42 eine resultierende Kraft in Schließrichtung ergibt. Dadurch wird gewährleistet, dass das Überdruckventil 104 nur kurzzeitig geöffnet ist.

Auch bei weiter steigendem Vordruck soll das Sicherheitsventil 102 in jedem Fall geschlossen bleiben. Das Überdruckventil 104 kann hingegen öffnen. Konstruktiv wird dies durch die Federkräfte der jeweiligen Wellenfedern 13; 42 und die Differenz der in Schließrichtung wirkenden Druckwirkungsflächen der jeweiligen Schließkolben 10; 19; 43 erreicht.

Insgesamt sind Überdruckventil 104 und Sicherheitsventil 102 somit so aufeinander abgestimmt, dass bei geschossenem Sicherheitsventil 102 die in Schließrichtung auf den Sicherheitsventil-Kolben 110 (genauer: auf den erweiterten Durchmesserbereich 19) einwirkenden Kräfte größer sind als die in Schließrichtung auf den Schieber 43 einwirkenden Kräfte.

Im normalen Betrieb sind somit Überdruckventil 104 und Steuerventil 103 geschlossen; das Sicherheitsventil 102 ist offen und ermöglicht den ungehinderten Gasfluss. Das Sicherheitsventil 102 schließt die Acetylen-Versorgungsleitung jedoch unmittelbar ab, wenn entweder das Überdruckventil 104 oder das Steuerventil 103 öffnet. Es erfüllt damit die Vorgaben für ein druckgesteuertes Absperrventil gemäß EN ISO 14114:1999; Anhang B, die Norm-Vorgaben für eine automatische Schnellschlusseinrichtung gemäß EN ISO 1411:1999; Absatz 3.6.2 und für eine Druckbegrenzungseinrichtung gemäß EN ISO 14114:1999, Absatz 3.7.

### Entlüftungsventil 106

Wenn das Sicherheitsventil 102 wegen Überschreitung des Grenzwertes für den Hinterdruck oder Überschreitung des Grenzwertes für den Vordruck geschlossen ist, ist ein Weiterbetrieb der Sicherheitseinrichtung nicht ohne weiteres möglich.

Der hintere Druckraum 12 steht in diesem Zustand unter Druck. Zur Entlüftung ist im Ventilkörper 1 ein Entlüftungsventil 106 vorgesehen. Das Entlüftungsventil 106 ist in eine weitere Bohrung des Ventilkörpers 1 eingesetzt, die parallel zur Mittenbohrung des Sicherheitsventils 102 verläuft. Es hat einen Entlüftungsventilraum 61, der über eine Druckausgleichsleitung 62 mit dem hinteren Druckraum 12 verbunden ist. Ein Gewindeeinsatz 163, der eine Nut mit einliegenden O-Ring 164 aufweist, ragt in den Entlüftungsventilraum 61 und verschließt diesen nach außen. Der Gewindeeinsatz 163 ist in die Bohrung des Ventilkörpers 1 eingeschraubt, wobei er an einer umlaufenden Wange des Ventilkörpers 1 zu liegen kommt und durch den Kontakt mit dieser eine metallische Dichtung ergänzend zur Abdichtung über den O-Ring 164 bildet. Das nach außen weisende Ende des Gewindeeinsatzes 163 ist mit einem Innensechskant 165 und mit einem weiteren Außengewinde versehen, auf das ein Gewindepfropfen 166 mit Durchgangsbohrung aufgeschraubt ist. Der Gewindepfropfen 166 verfügt gleichzeitig über ein Außengewinde, über das er in die Bohrung des Ventilkörpers 1 eingeschraubt ist.

Über den Innensechskant 165 kann der Gewindeeinsatz 163 aus dem Entlüftungsventilraum 61 herausgedreht werden (in der Darstellung von Figur 5 nach rechts. Gelangt der O-Ring 164 außer Eingriff wird der Entlüftungsventilraum 61 geöffnet, so dass das unter Druck stehende Acetylengas aus dem Entlüftungsventilraum 61 und allen mit diesem fluidisch verbundenen Leitungen und Hohlräumen und insbesondere aus dem hinteren Druckraum 12 ausströmen kann. Durch Eindrehen des Gewindeeinsatzes 163 in die Bohrung bis zum Anschlag gelangen O-Ring 164 und metallische Dichtung wieder in ihre Dichtungspositionen, so dass das Entlüftungsventil 106 wieder geschlossen ist.

Aufgrund der Entlüftung wird der Sicherheitsventil-Kolben 110 aufgrund des im vorderen Druckraum 11 anliegenden Gasdrucks und unterstützt von der Druckfeder 13 wieder in seine Ausgangsposition gebracht, so dass das Sicherheitsventil 102 somit wieder offen und einsatzbereit ist.

### Auslösungsanzeige 105

Auch für die Aufnahme der Auslösungsanzeige 105 ist im Ventilkörper 1 (genauer: im Gehäusedeckel 1B) eine Bohrung vorgesehen. Diese verläuft parallel zur Mittenbohrung für das Sicherheitsventil 102. Die Auslösungsanzeige 105 zeigt das Vorliegen einer Störung an. Zu diesem Zweck ist in der Bohrung ein Messingkolben 152 eingesetzt, der mit einem farbigen Anzeigestift 151 aus Kunststoff zusammenwirkt. Der Anzeigestift 151 ist einerseits in einer Sacklochbohrung des Messingkolben 152 eingesetzt, die koaxial zur Messingkolben-Längsachse verläuft und andererseits in der Durchgangsbohrung eines Gewindepfropfens 156 geführt. Der Gewindepfropfen 156 ist baugleich zum Gewindepfropfen 166 des Entlüftungsventils 106 und verfügt wie dieser über ein Außengewinde, über das er in die Bohrung des Ventilkörpers 1 eingeschraubt ist

Die Außenmantelfläche des Messingkolbens 152 ist gegen die Innenwandung der Bohrung des Ventilkörpers 1 mittels eines Paares von O-Ringen (mit Opfer-O-Ring) abgedichtet. Der Bohrungsboden ist über eine Druckausgleichsleitung 54 mit dem hinteren Druckraum 12 verbunden.

Bei geschlossenem Sicherheitsventil 102 wird der hintere Druckraum 12 unter Druck gesetzt, der sich über die Druckausgleichsleitung 54 zum Bohrungsboden des Anzeigeelements 105 fortpflanzt und dadurch den Messingkolben 152 mitsamt Anzeigestift 151 gegen die Kraft einer Rückstellfeder 53 aus der Bohrung herausschiebt (in der Darstellung von Figur 5 nach rechts). Nach Beseitigung der Störung und der Entlüftung über das Entlüftungsventil 106 werden Messingkolben 152 und Anzeigestift 151 mittels der Rückstellfeder 53 automatisch wieder in der Bohrung versenkt.

**Figur 9** zeigt die Ausführungsform der erfindungsgemäßen Sicherheitseinrichtung gemäß Beispiel 2 in einer Längsseiten-Ansicht mit dem zweigeteilten Ventilkörper 1, den beiderseitigen Gasanschlüssen 7 und 8 für den Anschluss der Sicherheitseinrichtung an die Acetylen-Versorgungsleitung sowie den Gasanschluss 130 für die Hinterdruck-Bypass-Leitung zum Steuerventil 103.

Die stirnseitige Ansicht von **Figur 10** zeigt darüber hinaus in einem Ausbruch Details des an der Mantelfläche des Ventilkörpers 1 ansetzenden Gasanschlusses 130 für die Hinterdruck-Bypass-Leitung sowie die Blindkappe 138 des Steuerventils 103.

Aus der räumlichen Darstellung der Sicherheitseinrichtung von **Figur 11** sind außerdem die Blindkappe 148 des Überdruckventils 104 sowie der Blindstopfen 108 für den alternativen abgewinkelten Gasschluss 7 erkennbar.

## Patentansprüche

1. Sicherheitseinrichtung zum Einbau in eine Gas-Versorgungsanlage, bei der mittels eines Hauptdruckreglers unter Vordruck zugeführtes Gas auf Hinterdruck entspannt wird, wobei es einen Ventilkörper (1) umfasst, in dem ein Überdruckventil (4; 104) einer Schnellschlusseinrichtung, ein Steuerventil (3; 103) einer Druckbegrenzungseinrichtung und ein dafür als gemeinsames Absperrventil dienendes Sicherheitsventil (2; 102) aufgenommen sind, indem das Sicherheitsventil (2; 102) mit dem Überdruckventil (4; 104) und dem Steuerventil (3; 103) fluidisch verbindbar ist und schließt, wenn entweder das Überdruckventil (4; 104) infolge eines oberhalb eines Vordruck-Grenzwertes liegenden Vordrucks öffnet oder wenn das Steuerventil (3; 103) infolge eines oberhalb eines Hinterdruck-Grenzwertes liegenden Hinterdrucks öffnet.

2. Sicherheitseinrichtung nach Anspruch 1, **dadurch gekennzeichnet, dass** das Sicherheitsventil (2; 102) einen Vordruck-Gaseinlass (15), einen Vordruck-Gasauslass (16) und zwischen Gaseinlass (15) und Gasauslass (16) eine Sicherheitsventil-Kammer aufweist, welcher mittels eines axial darin beweglichen und mit dem Vordruck öffnenden Sicherheitsventil-Schließelements, vorzugsweise eines Sicherheitsventil-Kolbens (10; 110), verschließbar und dabei in einen vorderen Druckraum (11) und in einen hinteren Druckraum (12) unterteilbar ist, wobei in den vorderen, dem Vordruck-Gaseinlass (15) zugewandten Druckraum (11) das Sicherheitsventil-Schließelement, vorzugsweise der Sicherheitsventil-Kolben (10; 110), mit einem ersten, kleineren Wirkungsquerschnitt hineinragt, und wobei in den hinteren, dem Vordruck-Gasauslass (16) zugewandten Druckraum (12) das Sicherheitsventil-Schließelement, vorzugsweise der Sicherheitsventil-Kolben (10), mit einem zweiten, größeren Wirkungsquerschnitt hineinragt, und wobei hinterer Druckraum (12) und vorderer Druckraum (11) jeweils über Druckausgleichsleitungen (37; 41; 30; 45) mit dem Überdruckventil (4; 104) und mit dem Steuerventil (3; 103) fluidisch verbindbar sind.

3. Sicherheitseinrichtung nach Anspruch 2, **dadurch gekennzeichnet, dass** der Sicherheitsventil-Kolben (10; 110) einen Hohlraum (14) und eine gegenüber der Sicherheitsventil-Kammer bereichsweise abgedichtete Kolbenwandung aufweist, wobei der Hohlraum (14) mindestens eine Querbohrung (17) hat, welche in einem Bereich durch die Kolbenwandung reicht, der bei geöffnetem Sicherheitsventil (2; 102) mit dem vorderen Druckraum (11) verbunden und bei geschlossenem Sicherheitsventil (2; 102) gegenüber dem vorderen Druckraum (11) abgedichtet ist.

4. Sicherheitseinrichtung nach Anspruch 2 oder 3, **dadurch gekennzeichnet, dass** das Steuerventil (3; 103) über eine Druckausgleichsleitung (30) mit dem Sicherheitsventil (2; 102) verbunden ist, über die bei geöffnetem Steuerventil (3; 103) Gas unter Vordruck in das Steuerventil (3; 103) einströmt und dadurch das geöffnete Sicherheitsventil (2; 102) schließt.

5. Sicherheitseinrichtung nach Anspruch 4 und Anspruch 2 oder 3, **dadurch gekennzeichnet, dass** das Steuerventil (3; 103) einen Hinterdruck-Gaseinlass (31) für das Gas aufweist, der mit einer Steuerventil-Kammer verbunden ist, welcher bis zu dem vorgegebenen Hinterdruck-Grenzwert mittels eines axial darin beweglichen Steuerventil-Schließelements, vorzugsweise eines Steuerventil-Kolbens (33), gegen den Hinterdruck-Gaseinlass (31) verschlossen ist, und wobei bei geöffnetem Steuerventil (3; 103) die Druckausgleichsleitungen (30; 37) offen sind und der Steuerventil-Kammer mit dem vorderen Druckraum (11) und mit dem hinteren Druckraum (12) fluidisch verbinden.

6. Sicherheitseinrichtung nach Anspruch 4 oder 5, **dadurch gekennzeichnet, dass** der Steuerventil-Kolben (33) einen Hohlraum (35) und eine gegenüber der Steuerventil-Kammer bereichsweise abgedichtete Kolbenwandung aufweist, wobei der Hohlraum (35) mit dem hinteren Druckraum (12) fluidisch verbunden ist und mindestens eine Querbohrung (36) hat, welche in einem Bereich durch die Kolbenwandung reicht, der bei geschlossenem Steuerventil (3; 103) abgedichtet ist und der bei geöffnetem Steuerventil (3; 103) mit dem vorderen Druckraum (11) fluidisch verbunden ist.

7. Sicherheitseinrichtung nach Anspruch 6, **dadurch gekennzeichnet, dass** die Steuerventil-Kammer und der Steuerventil-Kolben (33) so ausgelegt sind, dass bei Offenstellung des Steuerventils (3; 103) ein in Schließrichtung wirkender Druck einen größeren Wirkungsquerschnitt hat als ein in Offenrichtung (B) wirkender Druck.

8. Sicherheitseinrichtung nach einem oder mehreren der Ansprüche 2 bis 7, **dadurch gekennzeichnet, dass** das Überdruckventil (4; 104) einen mit dem Vordruck-Gaseinlass (15) verbundenen Überdruckraum (46) aufweist, welcher eine mittels eines axial verschiebbaren Schließelements (43) verschlossene Öffnung aufweist und über eine Druckausgleichsleitung (41) mit dem hinteren Druckraum (12) fluidisch verbunden ist.

9. Sicherheitseinrichtung nach Anspruch 8, **dadurch gekennzeichnet, dass** das Schließelement (43) mittels einer im Überdruckraum (46) angeordneten Feder (42) gegen die Überdruckraum-Öffnung gepresst wird und auf seiner dem Überdruckraum zugewandten Seite einen größeren Druckwirkungsquerschnitt hat als auf seiner gegenüberliegenden Seite.

10. Sicherheitseinrichtung nach einem oder mehreren der Ansprüche 2 bis 9, **dadurch gekennzeichnet, dass** im Ventilkörper(1) ein Entlüftungsventil (6; 106) aufgenommen ist, das einen Entlüftungsventilraum aufweist, der mittels eines mechanisch betätigbaren und dabei axial verschiebbaren Ver-schlusselements (63) verschlossen und über eine Druckausgleichsleitung (62) mit dem hinteren Druckraum (12) fluidisch verbunden ist.

11. Sicherheitseinrichtung nach Anspruch 10, **dadurch gekennzeichnet, dass** das Verschlusselement (63) mittels Gewindebolzens (66) verschiebbar ausgeführt ist.

12. Sicherheitseinrichtung nach einem der vorhergehenden Ansprüche 2 bis 11, **dadurch gekennzeichnet, dass** im Ventilkörper (1) eine Anzeigevorrichtung aufgenommen ist, die eine Bohrung umfasst, in der ein Sichtelement (51) axial beweglich gelagert ist unter Abdichtung der Bohrung und unter Belassung eines am Bohrungsboden vorgesehenen Anzeige-Druckraums, welcher über eine Druckleitung (52) mit dem hinteren Druckraum (12) fluidisch verbunden ist.

13. Sicherheitseinrichtung nach einem der vorhergehenden Ansprüche, **dadurch gekennzeichnet, dass** das Steuerventil (3; 103) und/oder das Überdruckventil (4; 104) als vorgefertigte, gekapselte Baugruppe ausgebildet sind.

14. Sicherheitseinrichtung nach Anspruch 13, **dadurch gekennzeichnet, dass** die vorgefertigte Baugruppe mit einer Abschlusskappe (138; 148) versehen ist, die eine optische Information über den Wartungsstatus trägt.

## Claims

1. A safety device for installation in a gas-supply system, where a main pressure regulator regulates at inlet pressure of a gas fed thereto to an outlet pressure, said safety device comprising a valve body (1) in which are accommodated an over-pressure valve (4; 104) of a quick-action shut-off device, a control valve (3; 103) of a pressure-limiting device, and a safety valve (2; 102) serving therefor as a common shut-off valve, whereby the safety valve (2; 102) is fluidically connected to the over-pressure valve (4; 104) and the control valve (3; 103), wherein the safety valve (2; 102) closes either when the over-pressure valve (4; 104) opens due to the inlet pressure being at an inlet pressure level that is above the inlet-pressure limit value, or when the control valve (3; 103) opens due to the outlet pressure being at an outlet pressure level that is above an outlet-pressure limit value.

2. The safety device as claimed in Claim 1, wherein the safety valve (2; 102) has an inlet-pressure gas inlet (15), an inlet-pressure gas outlet (16), and, a safety-valve chamber therebetween, said chamber being configured to be closed via a safety-valve closing element, ideally a safety-valve piston (10; 110), that is supported so as to be movable inside the chamber in an axial direction such that the safety valve opens with the inlet pressure, said chamber being divided into a front pressure chamber (11) and a rear pressure chamber (12), wherein the safety-valve closing element, ideally the safety-valve piston (10; 110), protrudes into the front pressure chamber (11) facing the inlet-pressure gas inlet (15) with a first effective cross-section, wherein the safety-valve closing element, ideally the safety-valve piston (10), protrudes into the rear pressure chamber (12) facing the inlet-pressure gas outlet (16) with a second effective cross-section that is larger than the first effective cross section, and wherein the rear pressure chamber (12) and the front pressure chamber (11) are both fluidically connected to the over-pressure valve (4; 104) and the control valve (3; 103) via pressure-compensation lines (37; 41; 30; 45).

3. The safety device as claimed in Claim 2, wherein the safety-valve piston (10; 110) has a piston wall sealed off from the safety-valve chamber area by area, and wherein the safety-valve piston has a cavity (14) with at least one cross hole (17) that extends through the piston wall and into an area that is connected to the front pressure chamber (11) when the safety valve (2; 102) is open and that is sealed off from the front pressure chamber (11) when the safety valve (2; 102) is closed.

4. The safety device as claimed in Claim 2 or 3, wherein the control valve (3; 103) is connected to the safety valve (2; 102) via a pressure-compensation line (30), and wherein gas flows through said pressure-compensation line (30) into the control valve (3; 103) at the inlet pressure when the control valve (3; 103) is open, causing the safety valve (2; 102) to close.

5. The safety device as claimed in Claim 4 and in Claim 2 or 3, wherein the control valve (3; 103) has an outlet-pressure gas inlet (31) for the gas, and the outlet-pressure gas inlet (31) is connected to a control-valve chamber closed against the outlet-pressure gas inlet (31) up to the predefined outlet-pressure limit value with a control-valve closing element, ideally a control-valve piston (33), that is supported so at be movable inside the chamber in an axial direction, and wherein when the control valve (3; 103) is open, the pressure-compensation lines (30; 37) are open and fluidically connect the control-valve chamber to the front pressure chamber (11) and the rear pressure chamber 12).

6. The safety device as claimed in Claim 4 or 5, wherein the control-valve piston (33) has a piston wall sealed off from the control-valve chamber area by area, and wherein the control valve piston (33) has a cavity (35) that is fluidically connected to the rear pressure chamber (12) and has at least one cross hole (36) that extends through the piston wall and into an area that is sealed when the control valve (3; 103) is closed and fluidically connected to the front pressure chamber (11) when the control valve (3; 103) is open.

7. The safety device as claimed in Claim 6, wherein the control-valve chamber and the control-valve piston (33) are configured such that when the control valve (3; 103) is open, a pressure acting in the closing direction has a larger effective cross-section than a pressure acting in the opening direction (B).

8. The safety device as claimed in one or more of the preceding Claims 2 to 7, wherein the over-pressure valve (4; 104) has an over-pressure chamber (46) connected to the inlet-pressure gas inlet (15) and wherein the chamber has an over-pressure-chamber opening, that is closed with of a closing element (43) that is able to move in an axial direction thereof and is fluidically connected to the rear pressure chamber (12) via a pressure-compensation line (41).

9. The safety device as claimed in Claim 8, wherein the closing element (43) is pressed against the over-pressure-chamber opening by a spring (42) located in the over-pressure chamber (46), and wherein the closing element has a larger effective pressure cross-section on a side thereof facing the over-pressure chamber than on an opposite side thereof.

10. The safety device as claimed in one or more of the preceding Claims 2 to 9, wherein the valve body (1) incorporates a vent valve (6; 106), wherein the valve has a vent-valve chamber that is closed via a closing element (63) that can be mechanically actuated and, moved in the axial direction, and the vent-valve chamber is fluidically connected to the rear pressure chamber (12) via a pressure-compensation line (62).

11. The safety device as claimed in Claim 10, wherein the closing element (63) is configures to be moved by a threaded bolt (66).

12. The safety device as claimed in any one of the preceding Claims 2 to 11, wherein the valve body (1) has a display instrument with a hole containing an inspection element (51) that is positioned on bearings that permit movement in an axial direction thereof, wherein the inspection element seals the hole, and wherein a display pressure chamber is located at the base of the hole, said display pressure chamber being fluidically connected to the rear pressure chamber (12) via a pressure line (52).

13. The safety device as claimed in any one of the preceding Claims, wherein the control valve (3; 103) and/or the over-pressure valve (4; 104) is a preassembled, self-contained module.

14. The safety device as claimed in Claim 13, wherein the preassembled module has a sealing cap (138; 148) that provides visual information on the maintenance status.

## Revendications

1. Dispositif de sécurité pour l'intégration dans une installation d'approvisionnement en gaz, dans laquelle, au moyen d'un régulateur de pression principal, du gaz alimenté à une pression amont est détendu à une pression aval, le dispositif comprenant un corps de soupape (1), dans lequel une soupape de surpression (4 ; 104) d'un dispositif d'arrêt d'urgence, une soupape de commande (3 ; 103) d'un dispositif de limitation de pression et une soupape de sûreté (2 ; 102) servant de soupape d'arrêt commune pour celles-ci sont reçues, du fait que la soupape de sûreté (2 ; 102) peut être reliée de manière fluidique à la soupape de surpression (4 ; 104) et la soupape de commande (3 ; 103), et se ferme soit quand la soupape de surpression (4 ; 104) s'ouvre par suite d'une pression amont supérieure à une valeur limite de pression amont soit quand la soupape de commande (3 ; 103) s'ouvre par suite d'une pression aval supérieure à une valeur limite de pression aval.

2. Dispositif de sécurité selon la revendication 1, **caractérisé en ce que** la soupape de sûreté (2 , 102) présente une entrée de gaz sous pression amont (15), une sortie de gaz sous pression amont (16) et entre l'entrée de gaz (15) et la sortie de gaz (16) une chambre de soupape de sûreté, qui peut être fermée au moyen d'un élément de fermeture de soupape de sûreté, de préférence un piston de soupape de sûreté (10 , 110), déplaçable axialement dans celle-ci et s'ouvrant à la pression amont, et ainsi divisible en un espace de pression avant (11) et un espace de pression arrière (12), l'élément de fermeture de soupape de sûreté, de préférence le piston de soupape de sûreté (10 ; 110), fait saillie dans l'espace de pression avant (11) orienté vers l'entrée de gaz sous pression amont (15) avec une première section efficace inférieure et, l'élément de fermeture de soupape de sûreté, de préférence le piston de soupape de sûreté (10), fait saillie dans l'espace de pression arrière (12) orienté vers la sortie de gaz sous pression amont (16) avec une seconde section efficace supérieure, et l'espace de pression arrière (12) et l'espace de pression avant (11) pouvant être reliés de manière fluidique à la soupape de surpression (4 ; 104) et la soupape de commande (3 ; 103) respectivement par le biais de conduites de compensation de pression (37 ; 41 ; 30 ; 45).

3. Dispositif de sécurité selon la revendication 2, **caractérisé en ce que** le piston de soupape de sûreté (10 ; 110) présente une cavité (14) et une paroi de piston étanche sur certaines zones par rapport à la chambre de soupape de sûreté, la cavité (14) comportant au moins un alésage transversal (17), qui s'étend à travers la paroi de piston dans une zone qui est reliée à l'espace de pression avant (11) lorsque la soupape de sûreté (2 ; 102) est ouverte et étanche par rapport à l'espace de pression avant (11) lorsque la soupape de sûreté (2 ; 102) est fermée.

4. Dispositif de sécurité selon la revendication 2 ou 3, **caractérisé en ce que** la soupape de commande (3 ; 103) est reliée à la soupape de sûreté (2 ; 102) par le biais d'une conduite de compensation de pression (30), par le biais de laquelle, lorsque la soupape de commande (3 ; 103) est ouverte, du gaz sous pression amont afflue dans la soupape de commande (3 ; 103) et ferme ainsi la soupape de sûreté (2 ; 102) ouverte.

5. Dispositif de sécurité selon la revendication 4 et la revendication 2 ou 3, **caractérisé en ce que** la soupape de commande (3 ; 103) présente une entrée de gaz sous pression aval (31) pour le gaz, qui est reliée à une chambre de soupape de commande, qui est fermée par rapport à l'entrée de gaz sous pression aval (31) au moyen d'un élément de fermeture de soupape de commande, de préférence un piston de soupape de commande (33), déplaçable axialement dans celle-ci jusqu'à la valeur limite de pression aval prédéfinie, et les conduites de compensation de pression (30 ; 37) étant ouvertes lorsque la soupape de commande (3 ; 103) est ouverte et reliant de manière fluidique la chambre de soupape de commande à l'espace de pression avant (11) et à l'espace de pression arrière (12).

6. Dispositif de sécurité selon la revendication 4 ou 5, **caractérisé en ce que** le piston de soupape de commande (33) présente une cavité (35) et une paroi de piston étanche sur certaines zones par rapport à la chambre de soupape de commande, la cavité (35) étant reliée de manière fluidique à l'espace de pression arrière (12) et comportant au moins un alésage transversal (36), qui s'étend à travers la paroi de piston dans une zone qui est étanche lorsque la soupape de commande (3 ; 103) est ouverte et reliée de manière fluidique à l'espace de pression avant (11) lorsque la soupape de commande (3 ; 103) est ouverte.

7. Dispositif de sécurité selon la revendication 6, **caractérisé en ce que** la chambre de soupape de commande et le piston de soupape de commande (33) sont conçus de telle manière que, lorsque la soupape de commande (3 ; 103) est en position ouverte, une pression agissant dans la direction de fermeture présente une section efficace supérieure à une pression agissant dans la direction d'ouverture (B).

8. Dispositif de sécurité selon une ou plusieurs des revendications 2 à 7, **caractérisé en ce que** la soupape de surpression (4 ; 104) présente un espace de surpression (46) relié à l'entrée de gaz sous pression amont (15), qui présente une ouverture fermée au moyen d'un élément de fermeture (43) déplaçable axialement et qui est relié de manière fluidique à l'espace de pression arrière (12) par le biais d'une conduite de compensation de pression (41).

9. Dispositif de sécurité selon la revendication 8, **caractérisé en ce que** l'élément de fermeture (43) est pressé contre l'ouverture de l'espace de surpression au moyen d'un ressort (42) disposé dans l'espace de surpression (46) et présente une section efficace de pression supérieure sur son côté orienté vers l'espace de surpression que sur son côté opposé.

10. Dispositif de sécurité selon une ou plusieurs des revendications 2 à 9, **caractérisé en ce qu'**une soupape d'évacuation d'air (6 ; 106) est reçue dans le corps de soupape (1), la soupape d'évacuation d'air présentant un espace de soupape d'évacuation d'air, qui est fermé au moyen d'un élément de fermeture (63) pouvant être actionné de manière mécanique et pouvant ainsi être déplacé axialement et qui est relié de manière fluidique à l'espace de pression arrière (12) par le biais d'une conduite de compensation de pression (62).

11. Dispositif de sécurité selon la revendication 10, **caractérisé en ce que** l'élément de fermeture (63) est réalisé déplaçable au moyen d'un boulon fileté (66).

12. Dispositif de sécurité selon l'une des revendications précédentes 2 à 11, **caractérisé en ce qu'**un dispositif indicateur est reçu dans le corps de soupape (1), le dispositif indicateur comprenant un trou, dans lequel un élément visible (51) est monté déplaçable axialement avec étanchéification d'alésage et en laissant un espace de pression d'indication prévu sur le fond d'alésage, qui est relié de manière fluidique à l'espace de pression arrière (12) par le biais d'une conduite sous pression (52).

13. Dispositif de sécurité selon l'une des revendications précédentes, **caractérisé en ce que** la soupape de commande (3 ; 103) et/ou la soupape de surpression (4 ; 104) sont réalisés sous la forme d'un ensemble préfabriqué encapsulé.

14. Dispositif de sécurité selon la revendication 13, **caractérisé en ce que** l'ensemble préfabriqué est pourvu d'un bouchon (138 ; 148) qui porte une information optique sur l'état de maintenance.
